# EUROPEAN PATENT APPLICATION

(11) **EP 2 280 035 A1**
(43) Date of publication of application: **02.02.2011**
(21) Application number: 09750505.1
(22) Date of filing: 14.05.2009
(51) Int. Cl.: C08G 18/63, C08G 101/00

(54) **MANUFACTURING METHOD FOR HARD POLYURETHANE FOAM**

(30) Priority: 20.05.2008 JP 2008131858; 19.02.2009 JP 2009036907
(71) Applicant: Asahi Glass Company, Limited, Chiyoda-ku Tokyo 100-8405 (JP)
(72) Inventor: YABUNO, Tatsuya, Tokyo 100-8405 (JP); SHIMIZU, Katsuhiko, Tokyo 100-8405 (JP); WADA, Hiroshi, Tokyo 100-8405 (JP); HAYASHI, Tomohiro, Tokyo 100-8405 (JP)
(74) Representative: Blodig, Wolfgang
(86) International application number: PCT/JP2009/059015
(87) International publication number: WO 2009/142143

(57) **Abstract**

To provide a method for producing a rigid polyurethane foam using a polymer-dispersed polyol, which has high compatibility with a polyol to be used and is excellent in the storage stability, and with which good heat insulating properties can be obtained when it is formed into a foam.

A method for producing a rigid polyurethane foam, which comprises reacting a polyol (Z) with a polyisocyanate in the presence of a blowing agent, a surfactant and a catalyst, wherein the (Z) is obtained by mixing a polyol (Z1) with a polymer-dispersed polyol (A) and has an average hydroxy value of from 200 to 800 mgKOH/g. The (A) is one having a monomer polymerized in a polyol (X), the (X) contains a polyether polyol (Y), the (Y) has an oxyethylene group content of at least 15 mass% and contains a polyol Y1 having a hydroxy value of from 200 to 800 mgKOH/g and a polyol Y2 having a hydroxy value of from 5 to 84 mgKOH/g, and the monomer contains a fluorinated acrylate or a fluorinated methacrylate.

## Description

### TECHNICAL FIELD

The present invention relates to a method for producing a rigid polyurethane foam.

### BACKGROUND ART

A rigid foamed synthetic resin (such as a rigid polyurethane foam, an isocyanurate foam or a polyurea foam, which may be hereinafter referred to also as "a rigid foam") produced by reacting a polyol component with a polyisocyanate component in the presence of a blowing agent, etc., is widely used as a heat-insulating material having closed cells.

As a blowing agent to be used for such a rigid foam, water and a low boiling point hydrofluorocarbon compound or hydrocarbon compound are mainly used.

With respect to a rigid foam represented by e.g. a board-stock foam, further density reduction of the foam is desired in order to reduce the cost or the weight by reducing the amount of the raw material to be used. However, there is a problem such that along with the density reduction of a foam, the strength of the foam tends to decrease, and the rigid foam is likely to undergo shrinkage.

Further, with respect to a blowing agent, in consideration of a load to the environment, it has been studied to reduce a low boiling point hydrofluorocarbon compound and increase water, or in consideration of the flammability, it has been studied to reduce a hydrocarbon compound and increase water, or a technique has been studied to use only water without using a low boiling point hydrofluorocarbon compound or hydrocarbon compound.

However, in a case where density reduction of a foam is attempted by combining water with a hydrofluorocarbon compound or hydrocarbon compound, or density reduction of a foam is attempted by water-foaming by carrying out foaming by means of only water, the foam tends to be remarkably susceptible to shrinkage, thus leading to deterioration in dimensional stability of the foam.

In order to secure the dimensional stability of a foam, it is usually conceivable to increase the density of the foam thereby to increase the strength of the foam, or to make cells of the foam to be open cells, or the like.

However, in the method of increasing the density of the foam, the amount of the raw material to be used increases, thus leading to an increase in cost. Further, in the method of making cells of the foam to be open cells, sufficient heat-insulating properties cannot be obtained, although the dimensional stability of the foam may thereby be improved.

That is, a rigid foam is desired to have a good dimensional stability of the foam and sufficient heat-insulating properties, when water is used as a blowing agent in a large amount or when foaming is carried out by water alone.

Heretofore, a method of using a fluorinated compound such as polytetrafluoroethylene (PTFE) has been proposed as prior art to improve the dimensional stability by preventing shrinkage of a rigid polyurethane foam (Patent Documents 1 and 2). According to the method disclosed in Patent Documents 1 and 2, by addition of PTFE having a small particle size, fine pores may be formed in the foam, whereby the dimensional stability will be improved and excellent heat-insulating properties will be also obtained.

Further, a method of incorporating a polymer-dispersed polyol to a polyol component is proposed (Patent Documents 3 and 4).

Here, "the polymer-dispersed polyol" is a polyol having polymer particles dispersed in a polyol such as a polyether polyol or a polyester polyol.

Such a polymer-dispersed polyol has heretofore been used to improve the hardness of a flexible foam or semi-rigid foam.

As a typical example of the method for producing a polymer-dispersed polyol, the following method is known. That is, it is a method of carrying out polymerization of a monomer having a polymerizable unsaturated group in a saturated polyol having no polymerizable unsaturated bond, if required, under such a condition that an unsaturated polyol having a polymerizable unsaturated bond is also present, followed by removing an unreacted component. As such a saturated polyol or unsaturated polyol, various polyether polyols or polyester polyols are known.
Patent Document 1: EP0224945
Patent Document 2: JP-A-8-503720
Patent Document 3: JP-A-57-25313
Patent Document 4: JP-A-11-302340

### DISCLOSURE OF THE INVENTION

### PROBLEMS TO BE SOLVED BY THE INVENTION

However, a fluorinated compound to be used, for example, in the method disclosed in Patent Documents 1 and 2, is usually poor in its solubility in an organic substance, and it has been found that when a fluorinated compound such as PTFE is stored as added to a polyol compound, the storage stability is inadequate, as the fluorinated compound and the polyol compound will be separated, and it tends to be difficult to produce a rigid polyurethane foam stably.

Further, it has been found that the polymer-dispersed polyol to be used in the method disclosed in Patent Document 3 is poor in the storage stability when mixed with a polyol for rigid polyurethane foams having a small molecular weight, whereby it is difficult to produce a rigid polyurethane foam stably, and it is difficult to satisfy both the dimensional stability and the heat-insulating properties when formed into a rigid polyurethane foam.

An object of the method disclosed in Patent Document 4 is to satisfy both the dimensional stability and the heat-insulating properties, and a problem of heat-insulating properties i.e. a thermal conductivity still remains.

Accordingly, it is an object of the present invention to provide a method for producing a rigid polyurethane foam, whereby it is possible to obtain a rigid polyurethane foam which is excellent in dimensional stability and has sufficient heat-insulating properties, and when a mixture (polyol component) of a polymer-dispersed polyol and a polyol for rigid polyurethane foams, to be used, is stored, the mixture is excellent in the storage stability, and thus it is possible to produce the rigid polyurethane foam stably.

Here, "the storage stability" in the present invention means a characteristic such that when a mixture (polyol component) of a polymer-dispersed polyol and a polyol for rigid polyurethane foams is stored, the uniformity of the mixture can be maintained. In a case where the storage stability is poor, it becomes difficult to obtain a rigid polyurethane foam having a stabilized quality, i.e. the polymer particles will be separated from the polyol compound, or in the mixture, the polymer-dispersed polyol will migrate to make the composition non-uniform.

### MEANS TO SOLVE THE PROBLEMS

The present invention provides a method for producing a rigid polyurethane foam, which comprises reacting a polyol component (Z) with a polyisocyanate component in the presence of a blowing agent, a surfactant and a catalyst, wherein the polyol component (Z) is obtained by mixing a polyol (Z1) with the following polymer-dispersed polyol (A) and has an average hydroxy value of from 200 to 800 mgKOH/g:
Polymer-dispersed polyol (A) being one having polymer particles dispersed in a polyol by polymerizing a monomer having a polymerizable unsaturated group in a polyol (X), wherein the polyol (X) contains a polyether polyol (Y), the polyether polyol (Y) has an oxyethylene group content of at least 15 mass%, the polyether polyol (Y) contains a polyol A having a hydroxy value of from 200 to 800 mgKOH/g and a polyol B having a hydroxy value of from 5 to 84 mgKOH/g, and the monomer having a polymerizable unsaturated group contains a fluorinated acrylate or a fluorinated methacrylate.

In the method for producing a rigid polyurethane foam of the present invention, it is preferred that the fluorinated acrylate or the fluorinated methacrylate is a monomer represented by the following formula (1): 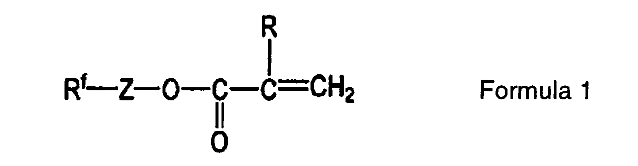 wherein R^{f} is a C₁₋₁₈ polyfluoroalkyl group, R is a hydrogen atom or a methyl group, and Z is a bivalent linking group having no fluorine atom, provided that Z and R^{f} are delimited so that R^{f} has a smaller number of carbon atoms.

Further, in the method for producing a rigid polyurethane foam of the present invention, it is preferred that the monomer having a polymerizable unsaturated group further contains at least one member selected from the group consisting of acrylonitrile, vinyl acetate and styrene.

Further, in the method for producing a rigid polyurethane foam of the present invention, it is preferred that the polyether polyol (Y) has an oxyethylene group content of at least 20 mass%.

It is preferred that the blend ratio (Y1/Y2) of the polyol Y1 to the polyol Y2 is from 5/95 to 70/30 (mass ratio).

Further, in the method for producing a rigid polyurethane foam of the present invention, it is preferred that the polyol Y2 is a polyoxyalkylene polyol obtained by addition-polymerizing propylene oxide and ethylene oxide to a polyhydric alcohol.

Further, in the method for producing a rigid polyurethane foam of the present invention, it is preferred that the proportion of the monomer represented by the formula (1) in the entire monomer having a polymerizable unsaturated group, is from 30 to 100 mass%.

Further, in the method for producing a rigid polyurethane foam of the present invention, it is preferred that the proportion of the polymer-dispersed polyol (A) in the polyol component (Z) is at least 0.01 mass%, and the proportion of the polymer particles in the polyol component (Z) is at least 0.001 mass%.

Further, the present invention provides a method for producing a rigid polyurethane foam, which comprises reacting a polyol component (Z) with a polyisocyanate component in the presence of a blowing agent, a surfactant and a catalyst, wherein the polyol component (Z) is obtained by mixing a polyol (Z1), the above polymer-dispersed polyol (A) and a polymer-dispersed polyol (B) not included in the polymer-dispersed polyol (A), and has an average hydroxy value of from 200 to 800 mgKOH/g.

It is preferred that in the polyol component (Z), the proportion of the polymer-dispersed polyol (A) is at least 0.01 mass% and the proportion of the polymer-dispersed polyol (B) is at least 0.1 mass%, and the proportion of the polymer particles in the polyol component (Z) is at least 0.001 mass%.

It is preferred that the mixing ratio of the polymer-dispersed polyol (A) to the polymer-dispersed polyol (B) is from 95:5 to 5:95 by the mass ratio of A:B.

Further, in the method for producing a rigid polyurethane foam of the present invention, it is preferred that the polyol component (Z) contains a polyoxyalkylene polyol prepared by using an active hydrogen compound having an aromatic ring as an initiator.

Further, in the method for producing a rigid polyurethane foam of the present invention, it is preferred that as the blowing agent, water alone, or water and at least one member selected from the group consisting of a hydrofluorocarbon compound and a hydrocarbon compound, are used.

### EFFECTS OF THE INVENTION

According to the method for producing a rigid polyurethane foam of the present invention, it is possible to obtain a rigid polyurethane foam which is excellent in dimensional stability and has sufficient heat-insulating properties. Further, when a polyol component containing a polymer-dispersed polyol, to be used, is stored, it is excellent in the storage stability, and thus it is possible to produce the rigid polyurethane foam stably.

### BEST MODE FOR CARRYING OUT THE INVENTION

### «METHOD FOR PRODUCING RIGID POLYURETHANE FOAM»

The method for producing a rigid polyurethane foam of the present invention is a method for producing a rigid polyurethane foam, which comprises reacting a polyol component (Z) with a polyisocyanate component in the presence of a blowing agent, a surfactant and a catalyst.

Now, the respective components will be described in detail.

### [POLYOL COMPONENT (Z)]

The polyol component (Z) in the present invention is the one obtained by mixing a polyol (Z1) with the above-mentioned specific polymer-dispersed polyol (A) or the one obtained by mixing the polyol (Z1), the above-mentioned specific polymer-dispersed polyol (A) and a polymer-dispersed polyol (B) not included in the (A).

As the polyol (Z1), it is possible to use, for example, a polyol which is commonly used for the production of a rigid polyurethane foam (which is in this specification referred to as "a polyol (Z1) for rigid polyurethane foams") such as a polyether polyol, a polyester polyol or a hydrocarbon polymer having hydroxy groups at its terminals.

The polyol (Z1) for rigid polyurethane foams preferably has from 2 to 8 functional groups on average.

Here, the number of functional groups means the number of functional groups (hydroxy groups) in the polyol to be reacted with the polyisocyanate component. For example, in a case of a polyether polyol, it is equal to the active hydrogen number in the initiator used for the preparation of the polyether polyol.

The polyol (Z1) for rigid polyurethane foams may specifically be the same one as exemplified with respect to the polyol (X) which will be hereinafter described with respect to the polymer-dispersed polyol (A).

The average hydroxy value of the polyol component (Z) is from 200 to 800 mgKOH/g, preferably from 200 to 700 mgKOH/g, more preferably from 200 to 600 mgKOH/g. When the average hydroxy value is at least 200 mgKOH/g, the high-strength rigid polyurethane foam is readily attainable, such being desirable. When the average hydroxy value is at most 800 mgKOH/g, the obtainable rigid polyurethane foam is less likely to be brittle, such being desirable.

In the present invention, the average hydroxy value means an average value of hydroxy values of all polyol compounds constituting the polyol component (Z).

The polyol component (Z) preferably contains a polyoxyalkylene polyol prepared by using an active hydrogen compound having an aromatic ring as an initiator in order to obtain better storage stability. The active hydrogen compound having an aromatic ring may preferably be a bisphenol; an aromatic amine such as tolylene diamine or methaxylene diamine; a Mannich compound obtained by reacting a phenol, an aldehyde and an alkanol amine.

### (POLYMER-DISPERSED POLYOL (A))

The polymer-dispersed polyol (A) in the present invention is one having polymer particles dispersed in a polyol by polymerizing a monomer having a polymerizable unsaturated group in a polyol (X), wherein the polyol (X) contains a polyether polyol (Y), the polyether polyol (Y) has an oxyethylene group content of at least 15 mass% and contains a polyol Y1 having a hydroxy value of from 200 to 800 mgKOH/g and a polyol Y2 having a hydroxy value of from 5 to 84 mgKOH/g, and the monomer having a polymerizable unsaturated group contains a fluorinated acrylate or a fluorinated methacrylate.

As the polyol component (Z) contains the polymer-dispersed polyol (A), it is possible to obtain a rigid polyurethane foam having good dimensional stability and having sufficient heat-insulating properties. Further, the polymer-dispersed polyol (A) has high compatibility with the polyol (Z1) for rigid polyurethane foams, and when their mixture (a polyol component) is stored, it is excellent in the storage stability, and thus, it is possible to produce a rigid polyurethane foam stably.

In the present invention, "in a polyol (X)" may be in a polyol (X) alone or in a mixture of a polyol (X) and a solvent exemplified in the following description with respect to "Method for producing polymer-dispersed polyol (A)".

### POLYOL (X)

In the polymer-dispersed polyol (A), as the polyol (X), it is possible to use e.g. a polyether polyol, a polyester polyol or a hydrocarbon polymer having hydroxy groups at its terminals.

As the polyether polyol, it is possible to use one obtained by addition-polymerizing a cyclic ether such as an alkylene oxide to an initiator such as water; a polyhydroxy compound such as a polyhydric alcohol or a polyhydric phenol; or an amine.

The initiator may specifically be a polyhydric alcohol such as ethylene glycol, diethylene glycol, propylene glycol, dipropylene glycol, neopentyl glycol, 3-methyl-1,5-pentanediol, 1,4-butanediol, 1,6-hexanediol, water, glycerin, trimethylolpropane, 1,2,6-hexanetriol, pentaerythritol, diglycerin, tetramethylolcyclohexane, methyl glucoside, sorbitol, mannitol, dulcitol, sucrose or triethanolamine; a polyhydric phenol such as bisphenol A, or an initial condensate of phenol/formaldehyde; an amino compound such as piperazine, aniline, monoethanolamine, diethanolamine, isopropanolamine, aminoethylethanolamine, ammonia, aminomethylpiperazine, aminoethylpiperazine, ethylenediamine, propylenediamine, hexamethylenediamine, tolylenediamine, xylylenediamine, diphenylmethanediamine, diethylenetriamine or triethylenetetramine, or a cyclic ether addition product thereof.

Such initiators may be used alone or in combination as a mixture of two or more of them.

As the cyclic ether, it is possible to use, for example, a 3- to 6-membered cyclic ether compound having one oxygen atom in the ring.

Such a cyclic ether may specifically be a compound having a 3-membered cyclic ether group (monoepoxide) such as ethylene oxide, propylene oxide, isobutylene oxide, 1-butene oxide, 2-butene oxide, trimethylethylene oxide, tetramethylethylene oxide, butadiene monooxide, styrene oxide, a-methylstyrene oxide, epichlorohydrin, epifluorohydrin, epibromohydrin, glycidol, butyl glycidyl ether, hexyl glycidyl ether, phenyl glycidyl ether, 2-chloroethyl glycidyl ether, o-chlorophenyl glycidyl ether, ethylene glycol diglycidyl ether, bisphenol A diglycidyl ether, cyclohexene oxide, dihydronaphthalene oxide or vinyl cyclohexene monooxide; or a compound having a 4-to 6-membered cyclic ether group, such as oxetane, tetrahydrofuran or tetrahydropyran.

Among them, a compound having a 3-membered cyclic ether group (monoepoxide) is preferred, and a C₂₋₄ alkylene oxide is more preferred. Ethylene oxide, propylene oxide, isobutylene oxide, 1-butene oxide or 2-butene oxide is further preferred, and ethylene oxide or propylene oxide is particularly preferred.

Such cyclic ethers may be used alone or in combination as a mixture of two or more of them.

In a case where two or more cyclic ethers are to be used in combination, such cyclic ethers are preferably C₂-₄ alkylene oxides, and a combination of propylene oxide and ethylene oxide is most preferred. In such a case, the mixture of two or more cyclic ethers may be addition-polymerized to the above mentioned initiator, or two or more cyclic ethers may be sequentially addition-polymerized.

In the present invention, the polyol (X) contains at least the specific polyether polyol (Y). As such a polyether polyol (Y) is contained, the compatibility of the polyol (Z1) for rigid polyurethane foams with the polymer-dispersed polyol (A) will be increased, whereby the storage stability of the polyol component (Z) will be improved.

The polyether polyol (Y) preferably has an oxyethylene group content of at least 15 mass%, preferably at least 20 mass%, particularly preferably at least 30 mass% in the polyether polyol (Y). Further, the oxyethylene group content is preferably at most 90 mass%.

When the oxyethylene group content is at least 15 mass%, the polymer particles are stably dispersed, and it will be possible to readily obtain a polymer-dispersed polyol having the storage stability improved. Particularly, when the oxyethylene group content is at least 30 mass%, it will be possible to readily obtain a polymer-dispersed polyol excellent in the storage stability for a longer period of time (for example a period of one month).

In the present invention, "the oxyethylene group content" means the proportion of oxyethylene groups in the polyol compound. The proportion of oxyethylene groups in the polyol compound (the oxyethylene group content) can be measured by measuring an NMR spectrum of a polyoxyalkylene polyol by using 300MHz 1 H-NMR (nuclear magnetic resonance) devise manufactured by JEOL, Ltd. using deuterated chloroform as a solvent.

Further, the polyether polyol (Y) contains the polyol Y1 and the polyol Y2.

The polyol Y1 has a hydroxy value of from 200 to 800 mgKOH/g, preferably from 300 to 700 mgKOH/g, more preferably from 400 to 700 mgKOH/g, particularly preferably from 500 to 700 mgKOH/g. When the hydroxy value is at most 800 mgKOH/g, the storage stability can be made good, since the viscosity is low and the compatibility with the polyol Y2 can be readily obtained. When it is at least 200 mgKOH/g, the effect of the dispersed-polymer is readily obtained and both the dimensional stability and the heat-insulating properties are readily attained.

Further, the polyol Y2 has a hydroxy value of from 5 to 84 mgKOH/g, preferably from 10 to 67 mgKOH/g, particularly preferably from 10 to 60 mgKOH/g. When the hydroxy value is at most 84 mgKOH/g, the storage stability can be made good even with a low viscosity, and when it is at least 5 mgKOH/g, the storage stability will be good, such being desirable.

The blend ratio (Y1/Y2) of the polyol Y1 to the polyol Y2 is preferably from 5/95 to 70/30 (mass ratio), more preferably from 5/95 to 55/45 (mass ratio), particularly preferably from 5/95 to 50/50 (mass ratio). When the mass ratio of the polyol Y1 is at most 70, the storage stability can be made good even with a low viscosity, and when it is at least 5, when a rigid polyurethane foam is produced, it is possible to attain both the dimensional stability and the heat-insulating properties by the addition of a polymer-dispersed polyol in a small amount, such being desirable.

Further, the polyol Y1 contained in the polyether polyol (Y) is preferably one obtained by addition-polymerizing propylene oxide or ethylene oxide, or propylene oxide or ethylene oxide and at least one another cyclic ether, with the above-mentioned initiator. The polyol Y1 is more preferably one obtained by addition-polymerizing propylene oxide or ethylene oxide by using a polyhydric alcohol as an initiator, and most preferably one obtained by using only propylene oxide.

The polyol Y1 is further preferably one obtained by addition-polymerizing only propylene oxide and by using at least one of glycerin, trimethylolpropane and 1,2,6-hexanetriol as an initiator, and particularly preferably one obtained by addition-polymerizing only propylene oxide by using glycerin as an initiator.

The polyol Y2 contained in the polyether polyol (Y) is preferably one obtained by addition-polymerizing propylene oxide, ethylene oxide or at least one another cyclic ether by using a polyhydric alcohol as an initiator. The polyol Y2 is more preferably polyoxyalkylene polyol obtained by addition-polymerizing propylene oxide and ethylene oxide to a polyhydric alcohol as an initiator.

The polyol Y2 is more preferably one obtained by addition-polymerizing propylene oxide and ethylene oxide by using at least one of glycerin, trimethylolpropane and 1,2,6-hexanetriol as an initiator, further preferably one obtained by addition-polymerizing propylene oxide and ethylene oxide by using only glycerin as an initiator, particularly preferably one obtained by addition-polymerizing a mixture of propylene oxide and ethylene oxide by using only glycerin as an initiator. Further, the ratio of ethylene oxide as the cyclic ether to be used for addition-polymerization is preferably from 10 mass% to 90 mass%, more preferably from 20 mass% to 90 mass%, particularly preferably from 20 mass% to 80 mass%, based on 100 mass% of the entire polyol Y2.

With such a polyoxyalkylene polyol, it is possible to attain both the heat-insulating properties and the dimensional stability by the addition of a polymer-dispersed polyol in a smaller amount when a rigid polyurethane foam is produced. Further, since the performance can be realized by the addition in a small amount, when mixed in the polyol for rigid polyurethane foams, polymer particles are stably dispersed and the storage stability can be improved.

Within the total amount of the oxyethylene groups contained in the polyether polyol (Y), at least 50 mass% is preferably contained in the polyol Y2, more preferably at least 70%, most preferably 100 mass%.

The polyester polyol as the polyol (x) may, for example, be a polyester polyol obtained by polycondensation of a polyhydric alcohol with a polyvalent carboxylic acid. As other examples, polyester polyols may be mentioned which are obtainable by, for example, polycondensation of a hydroxy carboxylic acid, polymerization of a cyclic ester (lactone), poly-addition of a cyclic ether to a polycarboxylic anhydride, and a transesterification of a waste polyethylene terephthalate.

As the hydrocarbon polymer having hydroxy groups at its terminals as the polyol (X), it is possible to use, for example, polytetramethylene glycol (PTMG) or polybutadiene polyol.

In the present invention, the polyol (X) contains at least the above polyether polyol (Y) and may further contain, in addition to the polyether polyol, a polyester polyol, a hydrocarbon polymer having hydroxy groups at its terminals, etc.

The content of the polyether polyol (Y) in the polyol (X) is preferably at least 50 mass%, more preferably at least 80 mass%, most preferably 100 mass%. When the content is at least 50 mass% and most preferably 100 mass%, it is possible to readily obtain a polymer-dispersed polyol (A) wherein the polymer particles are stably dispersed, and the storage stability will be improved.

### MONOMER HAVING POLYMERIZABLE UNSATURATED GROUP

The monomer having a polymerizable unsaturated group, to be used for the production of the polymer-dispersed polyol (A), contains a fluorinated acrylate or a fluorinated methacrylate (hereinafter sometimes referred to as "a fluorinated monomer").

As such a fluorinated monomer is contained, the dispersion stability of polymer particles in the polyol (X) will be good. Further, the compatibility of the polymer-dispersed polyol (A) to be used, with the polyol (Z1) for rigid polyurethane foams will be increased, whereby the storage stability will be improved, and it becomes possible to readily produce a rigid polyurethane foam stably. Further, when it is formed into a rigid polyurethane foam, the dimensional stability will be good, and at the same time, good heat-insulating properties can be readily obtained.

In the present invention, the fluorinated monomer is preferably a monomer represented by the above formula (1), since the compatibility with the polyol (X) is high.

In the above formula (1), R^{f} is a C₁-₁₈ polyfluoroalkyl group. In R^{f}, the number of carbon atoms is from 1 to 18, preferably from 1 to 10, more preferably from 3 to 8.

R^{f} is preferably such that the proportion of fluorine atoms in the alkyl group (the proportion of the number of hydrogen atoms substituted by fluorine atoms in the alkyl group) is preferably at least 80%, and it is particularly preferred that all hydrogen atoms are substituted by fluorine atoms. When the number of carbon atoms is at most 18, the stability of a foam will be good at the time of foaming in the production of a rigid polyurethane foam.

R is a hydrogen atom or a methyl group. That is, the monomer represented by the above formula (1) is an acrylate when R is a hydrogen atom, and it is a methacrylate when R is a methyl group.

Z is a bivalent linking group having no fluorine atom and is preferably a hydrocarbon group, and may, for example, be an alkylene group or an arylene group, more preferably an alkylene group. The alkylene group is preferably a C₁-₁₀ alkylene group, particularly preferably a C₁-₅ alkylene group, and it may be linear or branched. Here, Z and R^{f} are delimited so that R^{f} has a smaller number of carbon atoms.

Specific examples of the monomer represented by the above formula (1) will be shown below.

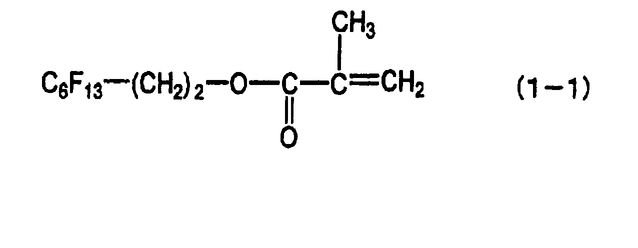

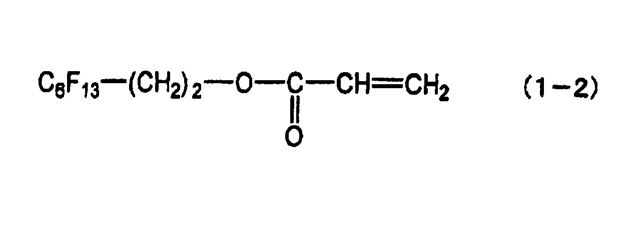

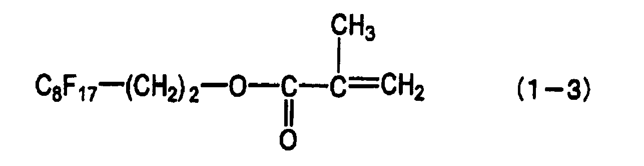

Such fluorinated monomers may be used alone or in combination as a mixture of two or more of them.

The amount of the fluorinated monomer to be used, is preferably from 10 to 100 mass%, more preferably from 30 to 100 mass%, based on the entire monomer having a polymerizable unsaturated group.

Particularly, the proportion of the monomer represented by the above formula (1) in the entire monomer having a polymerizable unsaturated group is preferably from 20 to 100 mass%, more preferably from 30 to 100 mass%, most preferably at least 40 mass%.

When the proportion of the monomer represented by the above formula (1) is at least 20 mass%, particularly at least 30 mass%, good heat-insulating properties can be obtained when a rigid polyurethane foam is formed.

According to the above, the polymer particles in the present invention may be a polymer made of a fluorinated monomer alone or a copolymer of a fluorinated monomer and other monomer having a polymerizable unsaturated group. Among them, the polymer particles are preferably a copolymer since the dispersion stability of the polymer particles in the polyol (X) is good.

In the present invention, the monomer having a polymerizable unsaturated group which may be used in combination with the fluorinated monomer, may, for example, be a cyano group-containing monomer such as acrylonitrile, methacrylonitrile or 2,4-dicyanobutene-1; a styrene monomer such as styrene, α-methylstyrene or a halogenated styrene; an acrylic monomer such as acrylic acid, methacrylic acid or an alkyl ester thereof, acrylamide or methacrylamide; a vinyl ester monomer such as vinyl acetate or vinyl propionate; a diene monomer such as isoprene, butadiene or another diene; an unsaturated fatty acid ester such as maleic acid diester or itaconic acid diester; a vinyl halide such as vinyl chloride, vinyl bromide or vinyl fluoride; a vinylidene halide such as vinylidene chloride, vinylidene bromide or vinylidene fluoride; a vinyl ether monomer such as methyl vinyl ether, ethyl vinyl ether or isopropyl vinyl ether; or another olefin, a halogenated olefin or a macromonomer.

"A macromonomer" means a low molecular weight polymer or oligomer having a radical polymerizable unsaturated group at one terminal.

Among them, acrylonitrile, vinyl acetate or styrene is preferred, and vinyl acetate is particularly preferred, since the storage stability for a longer period of time (for example a period of one month) will be good. Such monomers other than the fluorinated monomer may be used alone or in combination as a mixture of two or more of them.

In a case where the fluorinated monomer and acrylonitrile are to be used in combination, the mixing ratio of the fluorinated monomer to acrylonitrile is preferably from 10:90 to 90:10, more preferably from 30:70 to 70:30, by mass ratio. Within such a range, the storage stability for a long period of time will be improved. Further, particularly, the heat-insulating properties will be improved when a rigid polyurethane foam is formed.

Further, in a case where the fluorinated monomer and styrene are to be used in combination, the mixing ratio of the fluorinated monomer to styrene is preferably from 1:99 to 99:1, more preferably from 30:70 to 70:30, by mass ratio. In such a mixing ratio, when the proportion of styrene is at least the lower limit value, the dimensional stability will be more improved when a rigid polyurethane foam is formed. On the other hand, when the proportion of styrene is at most the upper limit value, the heat-insulating properties will be more improved when a rigid polyurethane foam is formed.

Furthermore, in a case where the fluorinated monomer, acrylonitrile and styrene are to be used in combination, the mixing ratio of the fluorinated monomer to the other monomers is preferably from 10:90 to 90:10, more preferably from 30:70 to 70:30, by mass ratio.

Further, the mixing ratio of acrylonitrile to styrene is preferably from 0:100 to 100:0, more preferably from 90:10 to 10:90, by mass ratio.

In such a mixing ratio, all of the storage stability when the mixture of the polymer-dispersed polyol with the polyol for rigid polyurethane foams to be used is stored, and the dimensional stability and the heat-insulating properties when a rigid polyurethane foam is formed, will be improved, and these properties will be obtained with good balance.

Furthermore, in a case where the fluorinated monomer and the vinyl acetate monomer are to be used in combination, the mixing ratio of the fluorinated monomer to the vinyl acetate monomer (the fluorinated monomer: the vinyl acetate monomer) is preferably from 30:70 to 70:30, more preferably from 40:60 to 70:30, by mass ratio.

In such a mixing ratio, all of the storage stability when the mixture (polyol component) of the polymer-dispersed polyol and the polyol for rigid polyurethane foams is stored, and the dimensional stability and the heat-insulating properties when a rigid polyurethane foam is formed, will be improved, and these properties will be obtained with good balance.

### (POLYMER-DISPERSED POLYOL (B))

The polymer-dispersed polyol (B) of the present invention is a polymer-dispersed polyol not included in the polymer-dispersed polyol (A).

The polymer-dispersed polyol (B) is one having polymer particles dispersed in a polyol by polymerizing a monomer having a polymerizable unsaturated group in the polyol, and preferably a polymer-dispersed polyol wherein the monomer having a polymerizable unsaturated group contains no fluorinated monomer. It is more preferred that the monomer having a polymerizable unsaturated group has no fluorine atom.

The polymer-dispersed polyol (B) can be optionally selected from know polymer-dispersed polyols. For example, preferred is the polymer-dispersed polyol disclosed in Patent Document 4.

The monomer having a polymerizable unsaturated group to be used for the production of the polymer-dispersed polyol (B) is preferably a mixture of ethylenically unsaturated nitrile and a vinyl carboxylate monomer. The mixing ratio of ethylenically unsaturated nitrile : vinyl carboxylate monomer (by mass ratio) is preferably from 75:25 to 5:95.

The ethylenically unsaturated nitrile is preferably acrylonitrile or methacrylonitrile, and the vinyl carboxylate monomer is preferably vinyl acetate or vinyl propionate.

The polyol to be used for the production of the polymer-dispersed polyol (B) is preferably a polyol mixture containing at least 5 wt% of a polyether polyol having a hydroxy value of at most 84 mgKOH/g and having an oxyethylene group content of at least 40 wt%, and at least 3 wt% of an amine polyol having a hydroxy value of from 250 to 900 mgKOH/g and obtained by adding a cyclic ether to an amine compound. The polymer-dispersed polyol (B) preferably has an average hydroxy value of from 200 to 800 mgKOH/g.

### [POLYISOCYANATE COMPONENT]

The polyisocyanate component in the present invention is not particularly limited, and it may, for example, be an aromatic, alicyclic or aliphatic polyisocyanate having at least two isocyanate groups; a mixture of at least two such polyisocyanates; or a modified polyisocyanate obtained by modifying such a polyisocyanate. A specific example may be a polyisocyanate such as tolylene diisocyanate (TDI), diphenylmethane diisocyanate (MDI), polymethylene polyphenyl isocyanate (so-called crude MDI), xylylene diisocyanate (XDI), isophorone diisocyanate (IPDI) or hexamethylene diisocyanate (HMDI), or its prepolymer type modified product; or an isocyanurate modified product, a urea modified product or a carbodiimide modified product. Among them, TDI, MDI, crude MDI or a modified product thereof, is preferred.

Such polyisocyanate components may be used alone or in combination as a mixture of two or more of them.

### [BLOWING AGENT]

As the blowing agent in the present invention, water is mainly employed. As a blowing agent other than water, a hydrofluorocarbon compound, a hydrocarbon compound or a commonly employed gas may, for example, be used in combination.

The hydrofluorocarbon compound may specifically be, for example, 1,1,1,2-tetrafluoroethane (HFC-134a), 1,1,1,3,3-pentafluoropropane (HFC-245fa), 1,1,1,3,3-pentafluorobutane (HFC-365mfc), 1,1,2,2-tetrafluoroethyl difluoromethyl ether (HFE-236pc), 1,1,2,2-tetrafluoroethyl methyl ether (HFE-254pc) or 1,1,1,2,2,3,3-heptafluoropropyl methyl ether (HFE-347 mcc).

The hydrocarbon compound may specifically be, for example, butane, n-pentane, isopentane, cyclopentane, hexane or cyclohexane.

The commonly employed gas may, for example, be air, nitrogen or carbon dioxide gas. Among them, carbon dioxide gas is preferred. An added state of an inert gas may be any one of a liquid state, a supercritical state or a subcritical state.

Such blowing agents may be used alone or in combination as a mixture of two or more of them.

In the present invention, it is preferred to use, as the blowing agent, water alone, or a combination of water and at least one member selected from hydrofluorocarbon compounds and hydrocarbon compounds. It is thereby possible to improve the foaming effect and to reduce the weight of the rigid polyurethane foam.

### [SURFACTANT]

The surfactant in the present invention is not particularly limited, and for example, a silicone surfactant may be mentioned as preferred. Particularly preferred is a silicone surfactant having a high foam stabilizing effect capable of reducing the cell diameter, in order to provide heat-insulating properties to the rigid polyurethane foam.

Such surfactants may be used alone or in combination as a mixture of two or more of them.

### [CATALYST]

The catalyst in the present invention is not particularly limited so long as it is a catalyst to promote the urethane-foaming reaction.

The catalyst to promote the urethane-foaming reaction may, for example, be a tertiary amine such as triethylene diamine, bis(2-dimethylaminoethyl) ether or N,N,N',N'-tetramethylhexamethylene diamine; or an organic metal compound such as dibutyltin dilaurate.

Further, a catalyst to promote the trimerization reaction of an isocyanate group may be used in combination, and it may, for example, be a metal salt of a carboxylic acid such as potassium acetate or potassium 2-ethylhexanoate.

Further, in a case where spray foaming is to be employed as a method for producing a rigid foam, it is preferred to use an organic metal catalyst such as lead 2-ethylhexanoate in combination, in order to complete the reaction in a short time.

### [OTHER ADDITIVES]

In the present invention, optional additives may be used as the case requires.

The additives may, for example, be a filler such as calcium carbonate or barium sulfate; an anti-aging agent such as an antioxidant or an ultraviolet stabilizer; a flame retardant, a plasticizer, a colorant, an antifungal agent, a cell opener, a dispersing agent, a discoloration preventing agent, etc.

### <METHOD FOR PRODUCING RIGID POLYURETHANE FOAM>

The present invention provides a method for producing a rigid polyurethane foam, which comprises reacting a polyol component (Z) with a polyisocyanate component in the presence of a blowing agent, a surfactant and a catalyst.

At the time of the production, it is preferred that preliminarily the polyol component (Z) is prepared, and a mixture (hereinafter referred to as a polyol system liquid) of the polyol component (Z) and some or all other than the polyisocyanate component, is prepared.

Here, the blowing agent may preliminarily be blended to the polyol system liquid or may be blended after mixing the polyisocyanate component to the polyol system liquid. It is particularly preferred to preliminarily blend it to the polyol system liquid.

The polyol component (Z) may, for example, be prepared by mixing the polymer-dispersed polyol (A) and the polyol (Z1) for rigid polyurethane foams.

The method for producing the polymer-dispersed polyol (A) is not particularly limited so long as it is a method which comprises polymerizing a monomer having a polymerizable unsaturated group in a polyol (X) to produce a polymer-dispersed polyol having polymer particles formed by polymerization of the monomer dispersed in the polyol. For example, since the dispersion stability of polymer particles in the polyol (X) is good, a preferred method may be a method which comprises a polymerizing a monomer having a polymerizable unsaturated group in the polyol (X) in the presence of a solvent, as the case requires, to let polymer particles extract directly thereby to obtain a polymer-dispersed polyol.

Specifically, the following methods (1) and (2) may, for example, be mentioned as the method for producing a polymer-dispersed polyol (A).
(1) A batch method wherein a part of the polyol (X) is charged into a reactor, and a mixture comprising the rest of the polyol (X), the monomer having a polymerizable unsaturated group, the polymerization initiator, etc. is gradually fed into the reactor with stirring to carry out the polymerization.
(2) A continuous method wherein a mixture comprising the polyol (X), the monomer having a polymerizable unsaturated group, the polymerization initiator, etc., is continuously fed into a reactor with stirring to carry out the polymerization and at the same time, a formed polymer-dispersed polyol is continuously discharged from the reactor.

In the present invention, either method (1) or (2) may be employed.

In the present invention, the amount of the entire monomer having a polymerizable unsaturated group to be used is not particularly limited, but it is preferably such an amount that the concentration of polymer particles in the polymer-dispersed polyol (A) would be at most 50 mass%, more preferably such an amount that the concentration of polymer particles would be from 1 to 50 mass%, particularly preferably such an amount that the concentration of polymer particles would be from 2 to 45 mass%, most preferably such an amount that the concentration of polymer particles would be from 5 to 30 mass%. When the concentration of polymer particles is at most 50 mass%, it will be possible to more readily obtain a polymer-dispersed polyol (A) wherein polymer particles are stably dispersed in the polyol (X), and the storage stability will be more improved. Further, a proper viscosity will be obtained, and the solution stability of the polymer-dispersed polyol (A) will be improved.

In the method for producing a polymer-dispersed polyol (A), as the polymerization initiator, it is common to use one to form a radical group to initiate the polymerization of the monomer having a polymerizable unsaturated group.

Specifically, it may, for example, be 2,2-azobis-isobutyronitrile (hereinafter abbreviated as "AIBN"), 2,2-azobis-2-methylbutyronitrile (hereinafter abbreviated as "AMBN"), 2,2-azobis-2,4-dimethylvaleronitrile, benzoyl peroxide, diisopropyl peroxydicarbonate, acetyl peroxide, di-tert-butyl peroxide or a persulfate. Among them, AIBN or AMBN is preferred.

Such polymerization initiators may be used alone or in combination as a mixture of two or more of them.

The amount of the polymerization initiator to be used is preferably from 0.01 to 10 parts by mass per 100 parts by mass of the total of the polyol (X), the entire monomer having a polymerizable unsaturated group including the fluorinated monomer and a stabilizer or a graft agent to be used as the case requires (as described hereinafter).

The solvent may, for example, be an alcohol such as methanol, ethanol, isopropanol, butanol, cyclohexanol or benzyl alcohol; an aliphatic hydrocarbon such as pentane, hexane, cyclohexane or hexene; an aromatic hydrocarbon such as benzene, toluene or xylene; a ketone such as acetone, methyl ethyl ketone or acetophenone; an ester such as ethyl acetate or butyl acetate; an ether such as isopropyl ether, tetrahydrofuran, benzyl ethyl ether, acetal, anisole or methyl-tert-butyl ether; a halogenated hydrocarbon such as chlorobenzene, chloroform, dichloroethane or 1,1,2-trichlorotrifluoroethane; a nitro compound such as nitrobenzene; a nitrile such as acetonitrile or benzonitrile; an amine such as trimethylamine, triethylamine, tributylamine or dimethylaniline; an amide such as N,N-dimethylformamide or N-methylpyrrolidone; or a sulfur compound such as dimethyl sulfoxide or sulfolane.

Such solvents may be used alone or in combination as a mixture of two or more of them.

In a case where a solvent is used in the production of the polymer-dispersed polyol (A), the mixing ratio of the solvent to the polyol (X) is preferably from 0:100 to 60:40, more preferably from 0:100 to 40:60, by mass ratio. When the mixing ratio is within such a range, agglomeration of polymer particles will be suppressed, and it becomes possible to readily obtain a polymer-dispersed polyol (A) wherein polymer particles are stably dispersed.

After completion of the polymerization of the monomer having a polymerizable unsaturated group, the solvent is removed. The method for removing the solvent is carried out usually by heating under reduced pressure. Otherwise, it can be carried out by heating under normal pressure or at a normal temperature under reduced pressure. At that time, an unreacted monomer will be removed together with the solvent.

The polymerization reaction of the monomer having a polymerizable unsaturated group in the polyol (X) is carried out at a temperature of at least the decomposition temperature of the polymerization initiator, usually from 80 to 160°C, preferably from 90 to 150°C, more preferably from 100 to 130°C, further preferably from 105 to 125°C, particularly preferably from 110 to 120°C.

Further, in the present invention, a stabilizer or a graft agent may be used in order to improve the dispersion stability of polymer particles in the polymer-dispersed polyol (A).

A preferred one as such a stabilizer or a graft agent may, for example, be a compound having an unsaturated bond in its molecule. Specifically, it may, for example, be a high molecular weight polyol or monool obtained by reacting an alkylene oxide with an active hydrogen compound having an unsaturated bond-containing group such as a vinyl group, an allyl group or an isopropyl group as an initiator; a high molecular weight polyol or monool obtained by reacting an unsaturated carboxylic acid or an acid anhydride thereof, such as maleic anhydride, itaconic anhydride, maleic acid, fumaric acid, acrylic acid or methacrylic acid, with a polyol and then, adding an alkylene oxide such as propylene oxide or ethylene oxide, as the case requires; a reaction product of an unsaturated alcohol such as 2-hydroxyethyl acrylate or butenediol, another polyol and a polyisocyanate; or a reaction product of an unsaturated epoxy compound such as allyl glycidyl ether with a polyol.

Such a stabilizer or a graft agent may or may not have a hydroxy group, but preferably has a hydroxy group.

The stabilizer or the graft agent may be incorporated by mixing it together with the polyol (X), the monomer having a polymerizable unsaturated group and the polymerization initiator, etc.

After completion of the polymerization reaction, the obtained polymer-dispersed polyol (A) may be used as it is, as a material for the polyol component (Z), or the obtained polymer-dispersed polyol (A) may be used after removing an unreacted monomer by reduced pressure treatment of the polyol. Preferred is the latter.

In the preparation of the polyol component (Z), the mixing ratio of the polymer-dispersed polyol (A) to the polyol (Z1) for rigid polyurethane foams is such that the proportion of the polymer-dispersed polyol (A) in the polyol component (Z) is preferably at least 0.01 mass%, more preferably at least 0.1 mass%, further preferably at least 0.3 mass%. On the other hand, the proportion of the polymer-dispersed polyol (A) is preferably at most 10 mass%, more preferably at most 7 mass%.

Further, in a case where the polymer-dispersed polyol (A) and the polymer-dispersed polyol (B) are to be used in combination, in the polyol component (Z), the proportion of the polymer-dispersed polyol (A) is preferably at least 0.01 mass%, and the proportion of the polymer-dispersed polyol (B) is preferably at least 0.1 mass%.

The proportion of the polymer-dispersed polyol (A) is more preferably at least 0.1 mass%, further preferably at least 0.3 mass%. The proportion of the polymer-dispersed polyol (A) is preferably at most 10 mass%, more preferably at most 7 mass%.

The proportion of the polymer-dispersed polyol (B) is more preferably at least 0.3 mass%, further preferably at least 0.5 mass%. The proportion of the polymer-dispersed polyol (B) is preferably at most 50 mass%, more preferably at most 30 mass%.

Further, the mixing ratio of the polymer-dispersed polyol (A) to the polymer-dispersed polyol (B) is preferably from 95:5 to 5:95, more preferably from 90:10 to 10:90, by the mass ratio of A:B.

In either case where the polymer-dispersed polyol (A) is to be used alone as a polymer-dispersed polyol, and a case where the polymer-dispersed polyol (A) and the polymer-dispersed polyol (B) are to be used in combination, the proportion of the total of polymer particles in the polyol component (Z) is preferably at least 0.001 mass%, more preferably at least 0.005 mass%, further preferably at least 0.01 mass%. On the other hand, the proportion of polymer particles is preferably at most 5 mass%, more preferably at most 1 mass%.

When the proportion of the polymer-dispersed polyol (A) and the proportion of the total of the polymer particles in the polyol component (Z) are at least the lower limit values, respectively, when a rigid polyurethane foam is formed, the dimensional stability and the heat-insulating properties will be improved. On the other hand, when they are at most the above upper limit values, the storage stability will be improved, and a rigid polyurethane foam can be stably produced. Further, a proper viscosity as a polyol component (Z) can readily be obtained, and the solution stability will be improved.

Further, by using the polymer-dispersed polyol (A) and the polymer-dispersed polyol (B) in combination, it is possible to readily attain both the heat-insulating properties and the dimensional stability.

The amount of water in a case where water alone is to be used as a blowing agent is preferably from 1 to 15 parts by mass, more preferably from 2 to 13 parts by mass, further preferably from 4 to 12 parts by mass, per 100 parts by mass of the polyol component (Z). When the amount of water is at least 1 part by mass, such is preferred from the viewpoint of weight reduction of the rigid polyurethane foam thereby obtainable. On the other hand, when the amount of water is at most 15 parts by mass, such is preferred since the mixing efficiency of water and the polyol component (Z) will be better.

In a case where as a blowing agent, water and a hydrofluorocarbon compound are used in combination, the amount of the hydrofluorocarbon compound is preferably from 1 to 50 parts by mass, more preferably from 20 to 40 parts by mass, per 100 parts by mass of the polyol component (Z).

In a case where as a blowing agent, water and a hydrocarbon compound are used in combination, the amount of the hydrocarbon compound is preferably from 1 to 40 parts by mass, more preferably from 10 to 20 parts by mass, per 100 parts by mass of the polyol component (Z).

In a case where as a blowing agent, water and an inert gas are used in combination, the amount of the inert gas is preferably from 0.01 to 100 parts by mass, more preferably from 0.1 to 20 parts by mass, per 100 parts by mass of the polyol component (Z).

The amount of the surfactant is required to be suitably selected, but it is preferably from 0.1 to 10 parts by mass, per 100 parts by mass of the polyol component (Z).

The amount of the catalyst is preferably from 0.1 to 10 parts by mass, per 100 parts by mass of the polyol component (Z).

The amount of the polyisocyanate component is preferably from 50 to 300 by isocyanate index (INDEX).

Here, the isocyanate index (INDEX) is a value represented by 100 times the proportion of the number of isocyanate groups based on the total number of active hydrogen in the polyol component (Z) and other active hydrogen compounds.

In a polyurethane formulation wherein a urethane-bond-forming catalyst is mainly used as the catalyst, the amount of the polyisocyanate component to be used is preferably from 50 to 140, more preferably from 60 to 130, by isocyanate index.

Further, in a polyisocyanurate formulation (urethane-modified polyisocyanurate formulation) wherein a catalyst to promote a trimerization reaction of an isocyanate group is mainly used as the catalyst, the amount of the polyisocyanate component is preferably from 120 to 300, more preferably from 120 to 250, by isocyanate index.

The method for producing a rigid polyurethane foam in the present invention may be applied to various molding methods.

The molding methods include, for example, pour-in-place, continuous production of a board-stock and spray-blown foaming.

The pour-in-place is a method wherein a raw material for the rigid polyurethane foam is poured into and foamed in a frame of e.g. a mold. The continuously produced board-stock foam is a laminate having a rigid polyurethane foam sandwiched between a pair of sheet materials, which is to be used as a heat-insulating material for building use. The spray-blown foaming is one wherein a rigid polyurethane foam is applied by spraying.

Among the above ones, the method for producing a rigid polyurethane foam of the present invention is suitably applicable to the production of a poured urethane foam, a continuously-produced board-stock foam, a spray foamed product or the like.

As the described in the foregoing, according to the method for producing a rigid polyurethane foam of the present invention, it is possible to obtain a rigid polyurethane foam which is excellent in dimensional stability and has sufficient heat-insulating properties. Further, when a mixture of the polymer-dispersed polyol and the polyol for rigid polyurethane foams, to be used, is stored, the storage stability is excellent, whereby the rigid polyurethane foam can be produced stably.

### EXAMPLES

Now, the present invention will be described in further detail with reference to Examples. However, it should be understood that the present invention is by no means restricted by such Examples. In Table 1 and Table 2, Production Examples 1 to 7 and 9 to 17 are working examples of the present invention, and Production Examples 8, 18 and 19 are comparative examples. Further, in Tables 3 to 8, Test Examples 1 to 7, 9 to 17, 19 to 25, 27 to 35, 37 to 43 and 45 to 53 provide evaluation results of the storage stability of the polymer-dispersed polyols produced in working examples. Test Examples 18, 36 and 54 provide evaluation results of the storage stability in a case where PTFE powder was used instead of the polymer-dispersed polyol of the present invention. In Tables 9 to 14, Production Examples 20 to 38, 43 to 50, 54 to 56, 60 to 62 and 66 to 68 provide results obtained by producing rigid polyurethane foams by using the polymer-dispersed polyols produced in working examples and evaluating physical properties. Production Examples 39 to 42, 51 to 53, 57 to 59, 63 to 65 and 69 to 71 provide results obtained by producing rigid polyurethane foams without using the polymer-dispersed polyol of the present invention and evaluating physical properties.

Further, examples for production of a rigid polyurethane foam are Production Examples 20 to 71. Among them, Production Examples 20 to 42 are evaluations suitable for the production of a continuously-laminated board heat-insulating material with relatively high production efficiency, wherein water alone is used as a blowing agent and gel time is adjusted to from 25 to 30 seconds. Production Examples 43 to 53 are evaluations suitable for a spray-blown foaming wherein a rigid polyurethane foam is sprayed in the mist form or a wall or a ceiling of housing or an apartment etc., to be used as a heat-insulating material wherein water alone is used as a blowing agent and the reactivity is increased within a range capable of mixing by stirring for evaluation. Further, Production Examples 54 to 59 are evaluations suitably for the production of laminated boards having relatively high heat-insulating properties, wherein water and hydrocarbon are used as blowing agents. Production Examples 60 to 65 are evaluations suitable for the production of laminated boards having relatively high heat-insulating properties, wherein water and hydrofluorocarbon are used as blowing agents. Production Examples 66 to 71 are evaluations suitable for pour-in-place foaming wherein a raw material is poured into and foamed in a panel shape or a box body, wherein water alone is used as a blowing agent, get time is adjusted to at least 85 seconds, and filing properties of the urethane foam is relatively necessary.

In the following Examples, the hydroxy value was measured in accordance with JIS K1557 (1970 edition). The viscosity was measured in accordance with JIS K1557 (1970 edition). With respect to the concentration (solid content) of polymer particles, the charged amount of the monomer having a polymerizable unsaturated group was taken as the concentration (solid content) of polymer particles.

### «EVALUATION OF POLYMER-DISPERSED POLYOL»

In the blend ratios shown in Table 1 and Table 2, polymer-dispersed polyols F1 to F19 were produced in the following Production Examples 1 to 19.

The blend compositions at the time of the production of the polymer-dispersed polyols, and of the obtained polymer-dispersed polyols F1 to F19, the hydroxy values (mgKOH/g), viscosities (mPa-s), concentrations (solid content: mass%) of polymer particles, the ratios of the polyol Y2 to the polyol Y1 (Y2/Y1, mass %), and the oxyethylene groups (%) in the polyol (Y) are, respectively, shown in Table 1 and Table 2.

The oxyethylene group (%) in the polyol (Y) is represented by the proportion (%) of the content based on 100 mass% of the entire polyol (Y).

In the blend compositions in Table 1 and Table 2, polyols D, E, F, G and N, macromonomers M1 and M2, and a monomer having a polymerizable unsaturated group are represented by "g", and the polymerization initiator is represented by the value of "parts by mass" per 100 parts by mass of the total of polyol D, E, F, G and N, and the entire monomer having a polymerizable unsaturated group.

### (MATERIALS USED)

The following polyols E, F and G correspond to the polyol Y1, and polyol D and N correspond to the polyol Y2.

### POLYETHER POLYOL (Y)

Polyol D: A polyoxyalkylene polyol having an oxyethylene group content of 65 mass% in polyol D and a hydroxy value of 48 mgKOH/g, prepared by using glycerin as an initiator, and addition-polymerizing ethylene oxide to the glycerin and then addition-polymerizing a mixture of propylene oxide (PO) and ethylene oxide (EO) [PO/EO = 46.2/53.8 (mass ratio)] thereto.

Polyol E: A polyoxyalkylene polyol having a hydroxy value of 400 mgKOH/g, prepared by using glycerin as an initiator, and addition-polymerizing propylene oxide (PO) to the glycerin.

Polyol N: A polyoxyalkylene polyol having an oxyethylene group content of 7 mass% in polyol N and a hydroxy value of 56 mgKOH/g, prepared by using glycerin as an initiator, and addition-polymerizing propylene oxide to the glycerin and then addition-polymerizing a mixture of propylene oxide (PO) and ethylene oxide (EO) [PO/EO = 88.2/11.8 (mass ratio)] thereto.

Polyol F: A polyoxyalkylene polyol having an oxyethylene group content of 0 mass% in polyol F and a hydroxy value of 760 mgKOH/g, prepared by using ethylenediamine as an initiator, and addition-polymerizing only PO to the ethylenediamine.

Polyol G: A polyoxyalkylene polyol having an oxyethylene group content of 0 mass% in polyol G and a hydroxy value of 650 mgKOH/g, prepared by using glycerin as an initiator, and addition-polymerizing only PO to the glycerin.

Polyol T: A polyoxyalkylene polyol having an oxyethylene group content of 60 mass% in polyol T and a hydroxy value of 28 mgKOH/g, prepared by using glycerin as an initiator and addition-polymerizing ethylene oxide to the glycerin and then addition-polymerizing a mixture of propylene oxide (PO) and ethylene oxide (EO) [PO/EO = 48.0/52.0 (mass ratio)] thereto.

### FLUORINATED MONOMER

Fluorinated monomer (f): A monomer represented by the following chemical formula (1-1) (manufactured by Asahi Glass Company, Limited) was used:

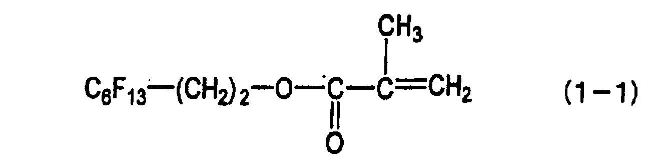

### OTHER MONOMERS HAVING POLYMERIZABLE UNSATURATED GROUPS

Acrylonitrile (manufactured by Junsei Chemical Co., Ltd.)
Styrene (manufactured by Godo Co., Ltd.)
Vinyl acetate (manufactured by Junsei Chemical Co., Ltd.)

### POLYMERIZATION INITIATOR

2,2-azobis-2-methylbutyronitrile (tradename: ABN-E, manufactured by Japan Hydrazine Co., Inc., hereinafter abbreviated as "AMBN")

### MACROMONOMER

Macromonomer M1: A macromonomer having a polymerizable unsaturated group and having a hydroxy value of 40 mgKOH/g, obtained by charging polyol D, tolylene diisocyanate (tradename: T-80, manufactured by Nippon Polyurethane Industry Co., Ltd.) and 2-hydroxyethyl methacrylate (manufactured by Junsei Chemical Co., Ltd.) in a molar ratio of polyol D/tolylene diisocyanate/2-hydroxyethyl methacrylate = 1/1/1 and reacting them at 60°C for one hour and further at 80°C for 6 hours.

Macromonomer M2: A macromonomer having a polymerizable unsaturated group and having a hydroxy value of 21 mgKOH/g, obtained by charging polyol T, tolylene diisocyanate (tradename: T-80, manufactured by Nippon Polyurethane Industry Co., Ltd.) and 2-hydroxyethyl methacrylate (manufactured by Junsei Chemical Co., Ltd.) in a molar ratio of polyol T/tolylene diisocyanate/2-hydroxyethyl methacrylate = 1/1/1 and reacting them at 60°C for one hour and then at 80°C for 6 hours.

### <PRODUCTION OF POLYMER-DISPERSED POLYOLS>

### Production Example 1: Production of polymer-dispersed polyol F1

Into a 5 L pressure reactor, a 75 mass% portion of polyol D, a 4 mass% portion of polyol G and a 1 mass% portion of macromonomer M1 out of 100 mass% of the entire amount, were charged, and while maintaining the temperature at 120°C, a mixture of the remaining 20 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F1. The results are shown in Table 1.

### Production Examples 2 to 8: Production of polymer-dispersed polyols F2 to 8

Polymer-dispersed polyols F2 to 8 were produced in the same manner as in Example 1 except that the amounts of polyol D and polyol G used were changed as follows. The results are shown in Table 1.

### Production Example 2: a 71.1 mass% portion of polyol D and a 7.9 mass% portion of polyol G.

### Production Example 3: a 63.2 mass% portion of polyol D and a 15.8 mass% portion of polyol G.

### Production Example 4: a 55.3 mass% portion of polyol D and a 23.7 mass% portion of polyol G.

### Production Example 5: a 47.4 mass% portion of polyol D and a 31.6 mass% portion of polyol G.

### Production Example 6: a 39.5 mass% portion of polyol D and a 39.5 mass% portion of polyol G.

### Production Example 7: a 23.7 mass% portion of polyol D and a 55.3 mass% portion of polyol G.

### Production Example 8: a 15.8 mass% portion of polyol D and a 63.2 mass% portion of polyol G.

### Production Example 9: Production of polymer-dispersed polyol F9

Into a 5 L pressure reactor, a 39.5 mass% portion of polyol D, a 39.5 mass% portion of polyol G and a 1 mass% portion of macromonomer M2 out of 100 mass% of the entire amount, were charged, and while maintaining the temperature at 120°C, a mixture of the remaining 20 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F9. The results are shown in Table 2.

### Production Example 10: Production of polymer-dispersed polyol F10

Polymer-dispersed polyol F10 was produced in the same manner as in Production Example 9 except for the changes that the amount of polyol D was 23.7 mass% portion and the amount of polyol G was 55.3 mass% portion. The results are shown in Table 2.

### Production Examples 11 to 13: Production of polymer-dispersed polyols F11 to F13

Polymer-dispersed polyols F11 to F13 were produced respectively in the same manner as in Production Example 5 except that the proportion of a monomer composition having a polymerizable unsaturated group was as indentified in Table 2. The results are shown in Table 2.

### Production Example 14: Production of polymer-dispersed polyol F14

Into a 5 L pressure reactor, a 47.4 mass% portion of polyol D, a 31.6 mass% portion of polyol G and a 1 mass% portion of macromonomer M1 out of 100 mass% of the entire amount, were charged, and while maintaining the temperature at 120°C, a mixture of the remaining 20 mass% portion of acrylonitrile, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F14. The results are shown in Table 2.

### Production Example 15: Production of polymer-dispersed polyol F15

Polymer-dispersed polyol F15 was produced in the same manner as in Production Example 14 except that the proportion of a monomer composition having a polymerizable unsaturated group was as identified in Table 2. The results are shown in Table 2.

### Production Example 16: Production of polymer-dispersed polyol F16

Into a 5 L pressure reactor, a 84.6 mass% portion of polyol D, a 4.4 mass% portion of polyol F and a 1 mass% portion of macromonomer M1 out of 100 mass% of the entire amount, were charged, and while maintaining the temperature at 120°C, a mixture of the remaining 10 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F16. The results are shown in Table 2.

### Production Example 17: Production of polymer-dispersed polyol F17

Into a 5 L pressure reactor, a 47.4 mass% portion of polyol D, a 31.6 mass% portion of polyol E and a 1 mass% portion of macromonomer M1 out of 100 mass% of the entire amount, were charged, and while maintaining the temperature at 120°C, a mixture of the remaining 20 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F17. The results are shown in Table 2.

### Production Example 18: Production of polymer-dispersed polyol F18

Into a 5 L pressure reactor, a 47.4 mass% portion of polyol D, a 31.6 mass% portion of polyol N and a 1 mass% portion of macromonomer M1 out of 100 mass% of the entire amount, were charged, and while maintaining the temperature at 120°C, a mixture of the remaining 20 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F18. The results are shown in Table 2.

### Production Example 19: Production of polymer-dispersed polyol F19

Into a 5 L pressure reactor, a 79 mass% portion of polyol D and a 1 mass% portion of macromonomer M1 out of 100 mass% of the entire amount, were charged, and while maintaining the temperature at 120°C, a mixture of the remaining 20 mass% portion of vinyl acetate, the fluorinated monomer (f) and the polymerization initiator (AMBN) was fed with stirring over a period of 2 hours. After completion of the feeding, stirring was continued for about 0.5 hour at the same temperature. Thereafter, an unreacted monomer was removed under reduced pressure at 120°C for 3 hours to prepare polymer-dispersed polyol F19. The results are shown in Table 2.

**TABLE 1**

| | Prep. Ex.1 | Prep. Ex. 2 | Prep. Ex. 3 | Prep. Ex. 4 | Prep. Ex. 5 | Prep. Ex. 6 | Prep. Ex. 7 | Prep. Ex. 8 |
|---|---|---|---|---|---|---|---|---|
| Polyol D | 375 | 355.5 | 316 | 276.5 | 237 | 197.5 | 118.5 | 79 |
| Polyol G | 20 | 39.5 | 79 | 118.5 | 158 | 197.5 | 276.5 | 316 |
| Macromonomer M1 | 5 | 5 | 5 | 5 | 5 | 5 | 5 | 5 |
| Fluorinated monomer (f) | 40 | 40 | 40 | 40 | 40 | 40 | 40 | 40 |
| Vinyl acetate | 60 | 60 | 60 | 60 | 60 | 60 | 60 | 60 |
| Polymerization initiator (parts by mass) | 2.5 | 2.5 | 2.5 | 2.5 | 2.5 | 2.5 | 2.5 | 2.5 |
| Hydroxy value (mgKOH/g) | 66 | 91 | 141 | 192 | 247 | 300 | 414 | 468 |
| Viscosity (mPa·s) | 1600 | 1600 | 1600 | 1700 | 1600 | 1500 | 1900 | 2000 |
| Concentration of polymer particles (solid content; mass%) | 20 | 20 | 20 | 20 | 20 | 20 | 20 | 20 |
| Ratio of the polyol Y2 to the polyol Y1 (Y2/Y1 ), mass(%) | 95/5 | 90/10 | 80/20 | 70/30 | 60/40 | 50/50 | 30/70 | 20/80 |
| Oxyethylene group (%) in the polyol (Y) | 61.8 | 58.5 | 52.0 | 45.5 | 39.0 | 32.5 | 19.5 | 13.0 |
| Name | F1 | F2 | F3 | F4 | F5 | F6 | F7 | F8 |

**TABLE 2**

| | Prep. Ex.9 | Prep. Ex. 10 | Prep. Ex.11 | Prep. Ex. 12 | Prep. Ex. 13 | Prep. Ex. 14 | Prep. Ex. 15 | Prep. Ex. 16 | Prep. Ex. 17 | Prep. Ex. 18 | Prep. Ex. 19 |
|---|---|---|---|---|---|---|---|---|---|---|---|
| Polyol D | 197.5 | 118.5 | 237 | 237 | 237 | 237 | 237 | 423 | 237 | 237 | 395 |
| Polyol F | | | | | | | | 22 | | | |
| Polyol G | 197.5 | 276.5 | 158 | 158 | 158 | 158 | 158 | | | | |
| Polyol E | | | | | | | | | 158 | | |
| Polyol N | | | | | | | | | | 158 | |
| Macromonomer M1 | | | 5 | 5 | 5 | 5 | 5 | 5 | 5 | 5 | 5 |
| Macromonomer M2 | 5 | 5 | | | | | | | | | |
| Fluorinated monomer (f) | 40 | 40 | 30 | 50 | 100 | 50 | 50 | 25 | 50 | 50 | 40 |
| Acetonitrile | | | | | | 50 | 40 | | | | |
| Styrene | | | | | | | 10 | | | | |
| Vinyl acetate | 60 | 60 | 70 | 50 | | | | 25 | 50 | 50 | 60 |
| Polymerization initiator (parts by mass) | 2.5 | 2.5 | 2.5 | 2.5 | 2.5 | 2.5 | 2.5 | 2.5 | 2.5 | 2.5 | 2.5 |
| Hydroxy value Hydroxy value (mgKOH/g) | 295 | 397 | 251 | 243 | 241 | 238 | 240 | 76 | 189 | 51 | 40 |
| Viscosity (mPa·s) | 1900 | 3200 | 1500 | 1600 | 1300 | 1700 | 1800 | 1300 | 1000 | 900 | 4060 |
| Concentration of polymer particles (solid content; mass%) | 20 | 20 | 20 | 20 | 20 | 20 | 20 | 10 | 20 | 20 | 20 |
| Ratio of the polyol Y2 to the polyol Y1 (Y2/Y1), mass(%) | 50/50 | 30/70 | 60/40 | 60/40 | 60/40 | 60/40 | 60/40 | 85/15 | 60/40 | 100/0 | 100/0 |
| Oxyethylene group (%) in the polyol (Y) | 32.5 | 19.5 | 39.0 | 39.0 | 39.0 | 39.0 | 39.0 | 39.0 | 39.0 | 41.8 | 65 |
| Name | F9 | F10 | F11 | F12 | F13 | F14 | F15 | F16 | F17 | F18 | F19 |

### <EVALUATION OF STORAGE STABILITY>

In the blend ratios of Test Examples 1 to 54 shown in Tables 3 to 8, polymer-dispersed polyols F1 to F17 produced in Production Examples 1 to 19 and the following polytetrafluoroethylene (PTFE) powder were added to polyol mixtures of the following polyols A to C, H and I to prepare samples for evaluation of the storage stability.

Then, the samples for evaluation were stored at 23°C for 2 months, and the appearances (separation states) of the samples for evaluation after the storage for one week, one month, 6 weeks and 2 months were visually observed, and the storage stability was evaluated by the following evaluation standards.

### Evaluation Standards

○: (good) The sample was a uniform dispersion.
× : (poor) Polymer particles or PTFE powder, and the polyol, were separated.

### (MATERIALS USED)

Polytetrafluoroethylene (PTFE) powder (tradename: Polytetrafluoroethylene Resin Powder fluon L-173, manufactured by Asahi Glass Company, Limited) POLYOL (Z1) FOR RIGID POLYURETHANE FOAMS

Polyol A: A polyether polyol having a hydroxy value of 350 mgKOH/g and a proportion of EO to the total of EO and PO being 33 mass%, prepared by using tolylene diamine as an initiator and addition-polymerizing EO, PO and EO in this order to the tolylene diamine.

Polyol B: A polyether polyol having a hydroxy value of 350 mgKOH/g, prepared by using N-(2-aminoethyl)piperazine as an initiator and addition-polymerizing only EO to the N-(2-aminoethyl)piperazine.

Polyol C: A polyether polyol having a hydroxy value of 380 mgKOH/g, prepared by using a mixture of sucrose and glycerin (mass ratio of 5:4) as an initiator and addition-polymerizing only PO to the mixture.

Polyol H: A polyester polyol having a hydroxy value of 200 mgKOH/g, prepared by polycondensation of diethylene glycol and terephthalic acid.

Polyol I: A polyol having a hydroxy value of 300 mgKOH/g and a proportion of EO to the total amount of added PO and EO being 60 mass%, obtained by adding PO and EO in this order to a Mannich condensate obtained by reacting nonylphenol, formaldehyde and diethanolamine in a molar ratio of 1: 1.4 : 2.1.

**TABLE 3**

| | Test Ex.1 | Test Ex. 2 | Test Ex. 3 | Test Ex. 4 | Test Ex. 5 | Test Ex. 6 | Test Ex. 7 | Test Ex.8 |
|---|---|---|---|---|---|---|---|---|
| Polyol A | 40 | 40 | 40 | 40 | 40 | 40 | 40 | 40 |
| Polyol B | 20 | 20 | 20 | 20 | 20 | 20 | 20 | 20 |
| Polyol C | 39.7 | 39.7 | 39.7 | 39.7 | 39.7 | 39.7 | 39.7 | 39.7 |
| F1 | 0.3 | | | | | | | |
| F2 | | 0.3 | | | | | | |
| F3 | | | 0.3 | | | | | |
| F4 | | | | 0.3 | | | | |
| F5 | | | | | 0.3 | | | |
| F6 | | | | | | 0.3 | | |
| F7 | | | | | | | 0.3 | |
| F8 | | | | | | | | 0.3 |
| Storage stability (23°C, one week) | ○ | ○ | ○ | ○ | ○ | ○ | ○ | × |
| Storage stability (23°C, one month) | ○ | ○ | ○ | ○ | ○ | ○ | ○ | × |
| Storage stability (23°C, 6 weeks) | ○ | ○ | ○ | ○ | ○ | ○ | ○ | × |
| Storage stability (23°C, 2 months) | ○ | ○ | ○ | ○ | ○ | ○ | × | × |

**TABLE 4**

| | Test Ex. 9 | Test Ex. 10 | Test Ex. 11 | Test Ex. 12 | Test Ex. 13 | Test Ex. 14 | Test Ex. 15 | Test Ex. 16 | Test Ex. 17 | Test Ex. 18 |
|---|---|---|---|---|---|---|---|---|---|---|
| Polyol A | 40 | 40 | 40 | 40 | 40 | 40 | 40 | 40 | 40 | 40 |
| Polyol B | 20 | 20 | 20 | 20 | 20 | 20 | 20 | 20 | 20 | 20 |
| Polyol C | 39.7 | 39.7 | 39.7 | 39.7 | 39.7 | 39.7 | 39.7 | 39.7 | 39.7 | 39.7 |
| F9 | 0.3 | | | | | | | | | |
| F10 | | 0.3 | | | | | | | | |
| F11 | | | 0.3 | | | | | | | |
| F12 | | | | 0.3 | | | | | | |
| F13 | | | | | 0.3 | | | | | |
| F14 | | | | | | 0.3 | | | | |
| F15 | | | | | | | 0.3 | | | |
| F16 | | | | | | | | 0.3 | | |
| F17 | | | | | | | | | 0.3 | |
| PTFE powder | | | | | | | | | | 0.3 |
| Storage stability (23°C, stability (23°C, one week) | ○ | ○ | ○ | ○ | ○ | ○ | ○ | ○ | ○ | × |
| Storage stability (23°C, one month) | ○ | ○ | ○ | ○ | ○ | ○ | ○ | ○ | ○ | × |
| Storage stability (23°C, 6 weeks) | ○ | ○ | ○ | ○ | ○ | ○ | ○ | ○ | ○ | × |
| Storage stability (23°C, 2 months) | ○ | × | ○ | ○ | × | ○ | × | × | × | × |

**TABLE 5**

| | Test Ex. 19 | Test Ex. 20 | Test Ex.21 | Test Ex. 22 | Test Ex. 23 | Test Ex. 24 | Test Ex. 25 | Test Ex. 26 |
|---|---|---|---|---|---|---|---|---|
| Polyol A | 40 | 40 | 40 | 40 | 40 | 40 | 40 | 40 |
| Polyol B | 20 | 20 | 20 | 20 | 20 | 20 | 20 | 20 |
| Polyol C | 39 | 39 | 39 | 39 | 39 | 39 | 39 | 39 |
| F1 | 1 | | | | | | | |
| F2 | | 1 | | | | | | |
| F3 | | | 1 | | | | | |
| F4 | | | | 1 | | | | |
| F5 | | | | | 1 | | | |
| F6 | | | | | | 1 | | |
| F7 | | | | | | | 1 | |
| F8 | | | | | | | | 1 |
| Storage stability (23°C, one week) | ○ | ○ | ○ | ○ | ○ | ○ | ○ | × |
| Storage stability (23°C, one month) | ○ | ○ | ○ | ○ | ○ | ○ | ○ | × |
| Storage stability (23°C, 6 weeks) | ○ | ○ | ○ | ○ | ○ | ○ | ○ | × |
| Storage stability (23°C, 2 months) | ○ | ○ | ○ | ○ | ○ | ○ | × | × |

**TABLE 6**

| | Test Ex. 27 | Test Ex. 28 | Test Ex. 29 | Test Ex. 30 | Test Ex.31 | Test Ex. 32 | Test Ex. 33 | Test Ex. 34 | Test Ex. 35 | Test Ex. 36 |
|---|---|---|---|---|---|---|---|---|---|---|
| Polyol A | 40 | 40 | 40 | 40 | 40 | 40 | 40 | 40 | 40 | 40 |
| Polyol B | 20 | 20 | 20 | 20 | 20 | 20 | 20 | 20 | 20 | 20 |
| Polyol C | 39 | 39 | 39 | 39 | 39 | 39 | 39 | 39 | 39 | 39 |
| F9 | 1 | | | | | | | | | |
| F10 | | 1 | | | | | | | | |
| F11 | | | 1 | | | | | | | |
| F12 | | | | 1 | | | | | | |
| F13 | | | | | 1 | | | | | |
| F14 | | | | | | 1 | | | | |
| F15 | | | | | | | 1 | | | |
| F16 | | | | | | | | 1 | | |
| F17 | | | | | | | | | 1 | |
| PTFE powder | | | | | | | | | | 1 |
| Storage stability (23°C, one week) | ○ | ○ | ○ | ○ | ○ | ○ | ○ | ○ | ○ | × |
| Storage stability (23°C, one month) | ○ | ○ | ○ | ○ | ○ | ○ | ○ | ○ | ○ | × |
| Storage stability (23_{°}C, 6 weeks) | ○ | ○ | ○ | ○ | ○ | ○ | ○ | ○ | ○ | × |
| Storage stability (23°C, 2 months) | ○ | × | ○ | ○ | × | ○ | × | × | × | × |

**TABLE 7**

| | Test Ex. 37 | Test Ex. 38 | Test Ex. 39 | Test Ex. 40 | Test Ex.41 | Test Ex. 42 | Test Ex. 43 | Test Ex. 44 |
|---|---|---|---|---|---|---|---|---|
| Polyol H | 70 | 70 | 70 | 70 | 70 | 70 | 70 | 70 |
| Polyol l | 29 | 29 | 29 | 29 | 29 | 29 | 29 | 29 |
| F1 | 1 | | | | | | | |
| F2 | | 1 | | | | | | |
| F3 | | | 1 | | | | | |
| F4 | | | | 1 | | | | |
| F5 | | | | | 1 | | | |
| F6 | | | | | | 1 | | |
| F7 | | | | | | | 1 | |
| F8 | | | | | | | | 1 |
| Storage stability (23°C, one week) | ○ | ○ | ○ | ○ | ○ | ○ | ○ | × |
| Storage stability (23°C, one month) | ○ | ○ | ○ | ○ | ○ | ○ | ○ | × |
| Storage stability (23°C, 6 weeks) | ○ | ○ | ○ | ○ | ○ | ○ | ○ | × |
| Storage stability (23°C, 2 months) | ○ | ○ | ○ | ○ | ○ | ○ | × | × |

**TABLE 8**

| | Test Ex.45 | Test Ex. 46 | Test Ex. 47 | Test Ex. 48 | Test Ex. 49 | Test Ex. 50 | Test Ex.51 | Test Ex. 52 | Test Ex. 53 | Test Ex 54 |
|---|---|---|---|---|---|---|---|---|---|---|
| Polyol H | 70 | 70 | 70 | 70 | 70 | 70 | 70 | 70 | 70 | 70 |
| Polyol l | 29 | 29 | 29 | 29 | 29 | 29 | 29 | 29 | 29 | 29 |
| F9 | 1 | | | | | | | | | |
| F10 | | 1 | | | | | | | | |
| F11 | | | 1 | | | | | | | |
| F12 | | | | 1 | | | | | | |
| F13 | | | | | 1 | | | | | |
| F14 | | | | | | 1 | | | | |
| F15 | | | | | | | 1 | | | |
| F16 | | | | | | | | 1 | | |
| F17 | | | | | | | | | 1 | |
| PTFE powder | | | | | | | | | | 1 |
| Storage stability (23°C, one week) | ○ | ○ | ○ | ○ | ○ | ○ | ○ | ○ | ○ | × |
| Storage stability (23°C, one month) | ○ | ○ | ○ | ○ | ○ | ○ | ○ | ○ | ○ | × |
| Storage stability (23°C, 6 weeks) | ○ | ○ | ○ | ○ | ○ | ○ | ○ | ○ | ○ | × |
| Storage stability (23°C, 2 months) | ○ | × | ○ | ○ | × | ○ | × | × | × | × |

It was confirmed from the results shown in Tables 3 to 8 that the storage stability for 6 weeks was good in Test Examples 1 to 7, 9 to 17, 19 to 25, 27 to 35, 37 to 43 and 45 to 53 wherein polymer-dispersed polyols F1 to F7 and F9 to F17 were used. Further, it was confirmed that the storage stability for 2 months was good in Test Examples 1 to 6, 9, 11, 12, 14, 19 to 24, 27, 29, 30, 32, 37 to 42, 45, 47, 48 and 50.

On the other hand, it was confirmed that the storage stability was poor in Test Examples 18, 36 and 54 wherein a PTFE powder was used, and Test Example 54.

Thus, it was confirmed that polymer-dispersed polyols F1 to F7 and F9 to F17, produced by the method for producing a polymer-dispersed polyol of the present invention, have high compatibility with a polyol for rigid polyurethane foams and are excellent in the storage stability.

### «EVALUATION OF RIGID POLYURETHANE FOAMS»

In the blend ratios of Production Examples 20 to 71 shown in Tables 9 to 14, rigid polyurethane foams were produced by the following production method.

In the blend compositions in Tables 9 to 14, the units of the amounts of various materials used are "parts by mass.

### (MATERIALS USED)

### POLYOL COMOPNENT

The above polyols A to D and polyols H, I and F, the following polyols J, L, M, O, P, Q and R, a PTFE powder, polymer-dispersed polyols F2, F5, F6, F7 and F9 to F19, and polyol S (polymer-dispersed polyol).

Polyol J: A polyether polyol having a hydroxy value of 540 mgKOH/g, prepared by addition-polymerizing only PO to a Mannich compound obtained by reacting aniline (1 mol), phenol (0.99 mol), paraformaldehyde (0.64 mol) and diethanolamine (2.2 mol).

Polyol L: A polyether polyol having a hydroxy value of 400 mgKOH/g, prepared by using glycerin as an initiator, and addition-polymerizing only PO to the glycerin.

Polyol M: A polyether polyol having a hydroxy value of 300 mgKOH/g, prepared by using ethylenediamine as an initiator, and addition-polymerizing only PO to the ethylenediamine.

Polyol O: A polyether polyol having a hydroxy value of 500 mgKOH/g, prepared by using sorbitol as an initiator, and addition-polymerizing only PO to the sorbitol.

Polyol P: A polyether polyol having a hydroxy value of 280 mgKOH/g, prepared by using 2, 2-bis(4' hydroxyphenyl)propane as an initiator, and addition-polymerizing only EO to the 2,2-bis(4' hydroxyphenyl)propane.

Polyol Q: A polyether polyol having a hydroxy value of 350 mgKOH/g, prepared by using monoethanolamine as an initiator, and addition-polymerizing only PO to the monoethanolamine.

Polyol R: A polyether polyol having a hydroxy value of 400 mgKOH/g, prepared by using pentaerythritol as an initiator, and addition-polymerizing only PO to the pentaerythritol.

Polyol S: A polyether polyol having a hydroxy value of 330 mgKOH/g, which corresponds to the polymer-dispersed polyol (B), prepared in such a manner that into a 5 L pressure reactor, 1.0 mass% of a polymerization initiator (AMBN) was added and charged to a mixture of a 30 mass% portion of polyol D, a 15 mass% portion of polyol F, a 30 mass% portion of polyol G, a 20 mass% portion of vinyl acetate and a 5 mass% portion of acrylonitrile, out of 100 mass% of the entire amount, and then the temperature was raised with stirring, followed by a reaction for 10 hours while maintaining the reaction solution at 80°C. The conversion of the monomer was at least 80%. After completion of the reaction, an unreacted monomer was removed by heating and deaeration under reduced pressure of 20 Pa at 110°C for 2 hours to obtain the polyol S.
·Flame Retardant: tris(2-chloropropyl)phosphate (tradename: TMCPP, manufactured by DAIHACHI CHEMICAL INDUSTRY CO., LTD.)
Blowing agent A: water
Blowing agent B: cyclopentane (tradename: MARUKASOL FH, manufactured by Maruzen Petrochemical Co., Ltd.)
Blowing agent C: 1,1,1,3,3-pentafluoropropane (HFC-245fa, manufactured by Honeywell)
·Surfactant: silicone surfactant (tradename: SZ-1671, manufactured by Dow Corning Toray Co., Ltd.)
·Catalyst A: N,N,N',N'-tetramethylhexamethylene diamine (tradename: TOYOCAT-MR, manufactured by TOSOH CORPORATION)
·Catalyst B: triethylene diamine (tradename: TEDA-L33, manufactured by TOSOH CORPORATION)
·Catalyst C: N,N',N"-tris(dimethylaminopropyl)hexahydro-S-triazine (tradename: POLYCAT 41, manufactured by AIR PRODUCTS)
·Catalyst D: a diethylene glycol solution of potassium 2-ethylhexanoate (potassium concentration: 15%, tradename: DABCO K-15, manufactured by AIR PRODUCTS)
·Catalyst E: mixture of amino alcohols (tradename: TOYOCAT-RX7, manufactured by TOSOH CORPORATION)
.Catalyst F: N,N-dimethylcyclohexylamine (tradename: KAOLIZER No.10, manufactured by KAO CORPORATION)
·Catalyst G: polyethylene polyamine (tradename: TOYOCAT-TT, manufactured by TOSOH CORPORATION)
·Catalyst H: mixture of 70% of 1,2-dimethyl imidazole and 30% of ethylene glycol (tradename: TOYOCAT-DM70, manufactured by TOSOH CORPORATION)
·Catalyst I: mixture of a quaternary ammonium salt and ethylene glycol (tradename: TOYOCAT-TRX, manufactured by TOSOH CORPORATION) Polyisocyanate: polymethylene polyphenyl polyisocyanate (Crude MDI) (tradename: MR-200, manufactured by Nippon Polyurethane Industry Co., Ltd.)

### <PRODUCTION OF RIGID POLYURETHANE FOAMS>

Into a 1 L plastic beaker, 100 parts by mass of the polyol component, the blowing agent, the surfactant, the flame retardant and the catalyst were, respectively, introduced in the blend ratios shown in Tables 9 to 14, and they were well mixed by a stirrer to obtain a polyol system liquid.

The amount of the polyisocyanate used, was 110 or 130 by isocyanate index (INDEX) in a case where the blowing agent was water alone, 105 by isocyanate index in a case where a hydrocarbon compound was used as a blowing agent, and 110 by isocyanate index in a case where a hydrofluorocarbon compound was used as a blowing agent, and a comparison was made in each case. The isocyanate index (INDEX) is a value represented by 100 times the proportion of the number of isocyanate groups based on the total equivalent of active hydrogen of the polyol composition and other active hydrogen compounds.

The liquid temperature of both materials of the polyol system liquid and the polyisocyanate component was maintained at 20°C, followed by stirring and mixing at a rotational speed of 3,000 rpm for 5 seconds. Then, the mixture was put into a wooden box of 200 mm in length×200 mm in width×200 mm in thickness mm, and free foaming was carried out to form a rigid polyurethane foam. Further, with respect to the evaluation method in Table 14, assuming a heat-insulating panel having metal sheet materials to be used for a refrigeration car or a refrigeration warehouse attached to both surfaces, an evaluation was carried out by using an aluminum mold of (X) 400 mmx(Y) 400 mm×(T) 50 mm. The liquid temperature of both materials of the polyol system liquid and the polyisocyanate component was maintained at 20°C, followed by stirring and mixing at a rotational speed of 3,000 rpm for 5 seconds, and then the mixture was poured into the mold placed vertically. A predetermined amount was poured so that the entire density became from 28 kg/m³ to 29 kg/m³, and the pouring site was closed for pack filling to foam a urethane foam.

### <EVALUATION OF RIGID POLYURETHANE FOAMS>

With respect to the rigid polyurethane foam obtained in each Production Example, the gel time (seconds), the box free density (unit: kg/m³) as the entire density, the compression strength (unit: MPa), the dimensional change (unit: %) as dimensional stability and thermal conductivity (unit: mW/mK), were respectively measured.

Further, the following evaluation was carried out for storage stability. The results are shown in Tables 9 to 14.

Further, in so-called panel evaluation shown in Table 14, after 20 minutes from the initiation of foaming, the formed foam was taken out and aged for 24 hours, and then the compression strength, the high temperature dimensional stability, the wet heat dimensional stability, the thermal conductivity and the storage stability were evaluated.

For the measurement of the gel time, a wire was inserted into the foam during foaming, and the time (seconds) until the foam gets sticky at the time when the wire was pulling out was measured.

The entire density (box free density) was measured in accordance with JIS K7222 (1998 Edition) and obtained from the mass and the volume.

### (EVALUATION OF COMPPRESSION STRENGTH)

The compression strength was measured in accordance with JIS A9511. The test specimen was cut out from the core portion of the blown foam into a size of 5 cm × 5 cm × 5 cm. Further, the compression strengths in the parallel direction (//) and the vertical direction (⊥) to the gravity direction, were measured. In Tables 9 to 13, "//+⊥" represents the compression strength obtained by adding the compression strength in the parallel direction (//) and the compression strength in the vertical direction (⊥).

### (EVALUATION OF DIMENSIONAL STABILITY)

The high temperature shrinkage was measured by a method in accordance with ASTM D 2126-75, and in a case where the blowing agent was water only, the high temperature dimensional stability and the wet heat dimensional stability were evaluated, and in a case where a hydrocarbon compound or a hydrofluorocarbon compound was used in combination as the blowing agent, the low temperature dimensional stability was evaluated.

As a sample, the rigid polyurethane foam in each Example was used, and after aging it for one hour, a test specimen of 100 mm in length (X) x 150 mm in width (Y) x 75 mm in thickness (T) was cut out and used. The above test specimen was stored for 24 hours or 50 hours in an atmosphere of 70°C for the high temperature dimensional stability, in an atmosphere of 70°C under a relative humidity of 95% for the wet heat dimensional stability or in an atmosphere of -30°C or 0°C for the low temperature dimensional stability, whereby the increased length (thickness) was represented by the dimensional change (unit: %) to the length (thickness) before the storage. Namely, the dimensional changes were measured under two conditions in three directions (X, Y and T) i.e. in a total of six directions.

Here, in the dimensional change, a negative numerical value means shrinkage, and the absolute value being large means a large dimensional change. The dimensional change was evaluated by the following evaluation standards.

### Evaluation Standards

Ⓞ (excellent) The maximum absolute value among dimensional changes in six directions was less than 1%.
○: (good) The maximum absolute value among dimensional changes in six directions was at least 1% and less than 5%.
Δ: (relatively good) The maximum absolute value among dimensional changes in six directions was at least 5% and less than 10%.
×: (poor) The maximum absolute value among dimensional changes in six directions was at least 10%.

### (EVALUATION OF HEAT-INSULATING PROPERTIES)

The thermal conductivity (unit: mW/mK) was measured in accordance with JIS A1412 by means of a thermal conductivity-measuring apparatus (tradename: AUTO λ HC-074 model, manufactured by EKO Instruments Co., Ltd.) at the average temperature of 20°C.

The heat-insulating properties were evaluated by the following evaluation standards.

### [Evaluation Standards]

The following standards were adopted in a case where the blowing agent was water only.
○: (good) The thermal conductivity was at most 27.
×: (poor) The thermal conductivity was higher than 27.

The following standards were adopted in a case where a hydrocarbon compound was used in combination as a blowing agent.
○: (good) The thermal conductivity was at most 22.
×: (poor) The thermal conductivity was higher than 22.

The following standards were adopted in a case where a hydrofluorocarbon compound was used in combination as a blowing agent.
○: (good) The thermal conductivity was at most 21.
×: (poor) The thermal conductivity was higher than 21.

### (EVALUATION OF STORAGE STABILITY)

In the blend ratios of Production Examples 20 to 71 as shown in Tables 9 to 14, the above polyol components A to D, polyols H, I and F, and the following polyols J, L, M, ○, P, Q and R were mixed, and then, polymer-dispersed polyols F2, F5, F6, F7 and F9 to F19, a PTFE powder, polyol D or polyol S (polymer-dispersed polyols) were, respectively, added and mixed to prepare 300 g of polyol mixtures, and each polyol mixture was put into a glass bottle provided with a cover. And it was stored at 23°C for one week, 6 weeks, one month and 2 months. From the upper layer of the polyol mixture after the storage, 100 g of the upper layer liquid was withdrawn by a syringe, the intermediate liquid was disposed so that 100 g of the lower layer liquid could be taken from the lower layer, and from the lower layer, 100 g of the lower layer liquid of the polyol mixture was sampled.

Then, a rigid polyurethane foam was produced in the same manner as in "Production of rigid polyurethane foams" except that in the above "Production of rigid polyurethane foams", 100 parts by mass of the upper layer liquid or 100 parts by mass of the lower layer liquid was used instead of 100 parts by mass of the polyol component.

And, from the characteristics of the obtained rigid polyurethane foam, the storage stability was evaluated on the basis of the following evaluation standards.

If the storage stability is poor, the polymer-dispersed polyol will migrate to the upper layer or lower layer during the storage, and the upper and lower compositions of the polyol mixture are different, which is influential over the properties of the rigid polyurethane foam produced by using such a polyol mixture. Accordingly, the storage stability can be evaluated by the foaming state in a case of using each of the upper layer liquid and the lower layer liquid, or by the dimensional change of the obtainable rigid polyurethane foam.

### [Evaluation Standards]

○: (good) No foaming failure is observed in either one obtained by foaming the upper layer liquid or the lower layer liquid, and the absolute value of the dimensional change of the rigid polyurethane foam was less than 5% in each case.

×: (poor) Foaming failure was observed in either one obtained by foaming the upper layer liquid or the lower layer liquid, or the absolute value of the dimensional change of either one of the rigid polyurethane foams was at least 5%.

### (PANEL EVALUATION)

In the panel evaluation shown in Table 14, the compression strength was measured by a method in accordance with JIS A 9511 using a sample cut out from the core portion of the formed foam into a size of (X) 40 mm × (Y) 40 mm × (T) 40 mm, with respect to three directions of X, Y and T. The high temperature dimensional stability was measured using a sample cut out from the core portion into a size of (X) 200 mm × (Y) 100 mm × (T) 25 mm, and the wet heat dimensional stability was measured using a sample cut out in a state where the surface skin was left, into a size of (X) 200 mm × (Y) 150 mm × (T) 50 mm, and they were evaluated in the same manner as in the evaluation method for the dimensional stability. The methods for evaluation of the thermal conductivity and the storage stability were the same as the above evaluation methods.

**TABLE 9**

| | | Prep. Ex. 20 | Prep. Ex. 21 | Prep. Ex. 22 | Prep. Ex. 23 | Prep. Ex. 24 | Prep. Ex. 25 | Prep. Ex. 26 | Prep. Ex. 27 | Prep. Ex. 28 |
|---|---|---|---|---|---|---|---|---|---|---|
| Polyol component | Polyol A | 40 | 40 | 40 | 40 | 40 | 40 | 40 | 40 | 40 |
| | Polyol B | 20 | 20 | 20 | 20 | 20 | 20 | 20 | 20 | 20 |
| | Polyol C | 37 | 39 | 39.3 | 38 | 39 | 39.3 | 39 | 39.5 | 39.7 |
| | Polymer-dispersed polyol | F2 | F5 | F5 | F6 | F6 | F6 | F7 | F7 | F7 |
| | | 3 | 1 | 0.7 | 2 | 1 | 0.7 | 1 | 0.5 | 0.3 |
| | Average hydroxy value (mgKOH/g) | 353 | 358 | 359 | 354 | 358 | 359 | 358 | 360 | 361 |
| Flame retardant | | 10 | 10 | 10 | 10 | 10 | 10 | 10 | 10 | 10 |
| Blowing agent A | | 6 | 6 | 6 | 6 | 6 | 6 | 6 | 6 | 6 |
| Surfactant A | | 2 | 2 | 2 | 2 | 2 | 2 | 2 | 2 | 2 |
| Catalyst A | | 0.5 | 0.5 | 0.5 | 0.5 | 0.5 | 0.5 | 0.5 | 0.5 | 0.5 |
| Polyisocyanate | | 193 | 195 | 195 | 195 | 195 | 195 | 195 | 195 | 195 |
| INDEX | | 110 | 110 | 110 | 110 | 110 | 110 | 110 | 110 | 110 |
| Gel time (sec.) | | 27 | 27 | 26 | 26 | 27 | 27 | 27 | 27 | 26 |
| Box free density (kg/cm³) | | 22.8 | 23.8 | 23.7 | 23.2 | 23.0 | 23.5 | 24.2 | 23.3 | 23.6 |
| Compression strength (MPa) | // | 0.17 | 0.16 | 0.17 | 0.17 | 0.16 | 0.16 | 0.16 | 0.16 | 0.17 |
| | ⊥ | 0.07 | 0.08 | 0.08 | 0.08 | 0.07 | 0.07 | 0.07 | 0.07 | 0.07 |
| | //+⊥ | 0.23 | 0.24 | 0.25 | 0.25 | 0.22 | 0.24 | 0.23 | 0.23 | 0.24 |
| High temperature 70°C 24 hr | X (100 mm) | -0.5 | -0.1 | 0.6 | 0.7 | 0.0 | 0.6 | 0.0 | -0.3 | 0.4 |
| | Y (150 mm) | -0.1 | -0.4 | -0.2 | -0.2 | 0.0 | -0.1 | 0.0 | -0.1 | 0.1 |
| | T (75 mm) | -0.4 | -0.3 | 0.6 | 0.6 | 0.0 | 0.2 | -0.2 | -0.4 | 0.7 |
| Wet heat 70°C 95% 24 hr | × (100 mm) | -3.4 | -0.1 | 0.0 | 0.3 | 0.4 | -0.2 | 0.4 | -0.1 | 0.0 |
| | Y (150 mm) | 0.7 | 0.6 | 0.6 | 0.4 | 0.8 | 0.4 | 0.4 | 0.5 | 0.9 |
| | T (75 mm) | -2.0 | 0.3 | 0.1 | 0.6 | 0.5 | 0.3 | 0.3 | 0.1 | 0.1 |
| Dimensional stability | | ○ | Ⓞ | Ⓞ | Ⓞ | Ⓞ | Ⓞ | Ⓞ | Ⓞ | Ⓞ |
| Thermal conductivity (mW/mK) | | 22.9 | 26.1 | 24.4 | 23.9 | 23.4 | 24.0 | 26.8 | 26.3 | 25.5 |
| Heat-insulating properties | | ○ | ○ | ○ | ○ | ○ | ○ | ○ | ○ | ○ |
| Storage stability (23°C, one week) | | ○ | ○ | ○ | ○ | ○ | ○ | ○ | ○ | ○ |
| Storage stability (23°C, one month) | | ○ | ○ | ○ | ○ | ○ | ○ | ○ | ○ | ○ |
| Storage stability (23°C, 6 weeks) | | ○ | ○ | ○ | ○ | ○ | ○ | ○ | ○ | ○ |
| Storage stability (23°C, 2 months) | | ○ | ○ | ○ | ○ | ○ | ○ | ○ | ○ | ○ |

**TABLE 10**

| Polyol A | | Prep. Ex.29 | Prep. Ex. 30 | Prep. Ex. 31 | Prep. Ex. 32 | Prep. Ex. 33 | Prep. Ex. 34 | Prep. Ex. 35 | Prep. Ex. 36 | Prep. Ex. 37 | Prep. Ex. 38 | Prep. Ex. 39 | Prep. Ex. 40 | Prep. Ex. 41 | Prep. Ex. 42 |
|---|---|---|---|---|---|---|---|---|---|---|---|---|---|---|---|
| Polyol component | Polyol A | 40 | 40 | 40 | 40 | 40 | 40 | 40 | 40 | 40 | 40 | 40 | 40 | 40 | 40 |
| | Polyol B | 20 | 20 | 20 | 20 | 20 | 20 | 20 | 20 | 20 | 20 | 20 | 20 | 20 | 20 |
| | Polyol C | 39.7 | 39.7 | 39 | 39 | 39 | 39 | 39 | 39 | 39 | 38.3 | 37 | 37 | 39.9 | 35 |
| | Polymer-dispersed | F9 | F10 | F11 | F12 | F13 | F14 | F15 | F16 | F17 | F5 | F18 | F19 | | |
| | polyol | 0.3 | 0.3 | 1 | 1 | 1 | 1 | 1 | 1 | 1 | 0.7 | 3 | 3 | | |
| | PTFE powder | | | | | | | | | | | | | 0.1 | |
| | Polyol D | | | | | | | | | | | | | | 5 |
| | Polyol S | | | | | | | | | | 1 | | | | |
| | Average hydroxy value (mgKOH/g) | 362 | 362 | 361 | 361 | 361 | 361 | 361 | 362 | 360 | 361 | 352 | 352 | 362 | 345 |
| Flame retardant | | 10 | 10 | 10 | 10 | 10 | 10 | 10 | 10 | 10 | 10 | 10 | 10 | 10 | 10 |
| Blowing agent A | | 6 | 6 | 6 | 6 | 6 | 6 | 6 | 6 | 6 | 6 | 6 | 6 | 6 | 6 |
| Surfactant | | 2 | 2 | 2 | 2 | 2 | 2 | 2 | 2 | 2 | 2 | 2 | 2 | 2 | 2 |
| Catalyst A | | 0.5 | 0.5 | 0.5 | 0.5 | 0.5 | 0.5 | 0.5 | 0.5 | 0.5 | 0.5 | 0.5 | 0.5 | 0.5 | 0.5 |
| Polyisocyanate | | 196 | 196 | 195 | 195 | 195 | 195 | 195 | 195 | 195 | 195 | 195 | 192 | 196 | 191 |
| INDEX | | 110 | 110 | 110 | 110 | 110 | 110 | 110 | 110 | 110 | 110 | 110 | 110 | 110 | 110 |
| Gel time (sec.) | | 26 | 25 | 26 | 26 | 27 | 28 | 27 | 25 | 27 | 25 | 27 | 26 | 27 | 25 |
| Box free density | | 22.9 | 22.9 | 22.5 | 22.6 | 22.8 | 22.3 | 22.7 | 22.3 | 22.5 | 23.9 | 22.3 | 22.9 | 22.4 | 22.4 |
| Compression strength (MPa) strength (MPa) | // | 0.16 | 0.16 | 0.16 | 0.17 | 0.17 | 0.16 | 0.17 | 0.18 | 0.16 | 0.16 | 0.15 | 0.16 | 0.15 | 0.15 |
| | ⊥ | 0.07 | 0.07 | 0.07 | 0.06 | 0.07 | 0.06 | 0.07 | 0.06 | 0.05 | 0.07 | 0.06 | 0.07 | 0.07 | 0.05 |
| | //+⊥ | 0.23 | 0.23 | 0.23 | 0.23 | 0.23 | 0.22 | 0.24 | 0.24 | 0.21 | 0.22 | 0.21 | 0.23 | 0.22 | 0.20 |
| High temperature 70°C 24 hr | X (100 mm) | 1.0 | -1.6 | 0.5 | 0.4 | 0.2 | 0.4 | 0.6 | 0.4 | 0.5 | 0.4 | -2.2 | 1.0 | 1.1 | -33.2 |
| | Y (150 mm) | -0.1 | 0.1 | 0.0 | -0.2 | 0.1 | -0.1 | -0.1 | -0.1 | -0.3 | -0.1 | 0.1 | -0.1 | -0.1 | -6.4 |
| | T (75 mm) | 0.5 | -0.9 | 0.4 | 0.0 | 0.3 | 0.5 | 0.1 | 0.2 | 0.1 | 0.3 | -0.8 | 0.5 | 0.6 | -11.6 |
| Wet heat 70°C 95% 24 hr | X (100 mm) | 0.2 | -3.2 | 0.4 | -0.4 | 0.1 | -0.6 | 0.2 | 1.1 | 0.9 | -0.1 | -3.8 | 0.2 | 0.8 | -28.8 |
| | Y (150mm) | 0.7 | 0.9 | 0.5 | 0.6 | 0.7 | 0.8 | 0.7 | 0.3 | 0.7 | 0.5 | 0.6 | 0.7 | 0.7 | -12.3 |
| | T (75 mm) | 0.2 | -2.1 | 0.3 | -0.4 | 0.4 | -0.9 | 0.5 | 1.0 | 0.2 | 0.1 | -2.0 | 0.2 | 0.8 | -16.7 |
| Dimensional stability | | ⊚ | ○ | ⊚ | ⊚ | ⊚ | ⊚ | ⊚ | ○ | ⊚ | ⊚ | ○ | ⊚ | ○ | × |
| Thermal conductivity | | 24.8 | 23.7 | 25.4 | 24.3 | 24.2 | 25.2 | 27.0 | 26.2 | 26.2 | 25.0 | 26.5 | 24.8 | 26.1 | 23.7 |
| Heat-insulating properties | | ○ | ○ | ○ | ○ | ○ | ○ | ○ | ○ | ○ | ○ | ○ | ○ | ○ | ○ |
| Storage stability (23°C, one week) | | ○ | ○ | ○ | ○ | ○ | ○ | ○ | ○ | ○ | ○ | ○ | ○ | × | ○ |
| Storage stability (23°C, one month) | | ○ | ○ | ○ | ○ | ○ | ○ | ○ | ○ | ○ | ○ | ○ | ○ | × | ○ |
| Storage stability (23°C, 6 weeks) | | ○ | ○ | ○ | ○ | ○ | ○ | ○ | ○ | ○ | ○ | × | × | × | ○ |
| Storage stability (23°C, 2 months) | | ○ | ○ | ○ | ○ | × | ○ | × | × | × | ○ | × | × | × | ○ |

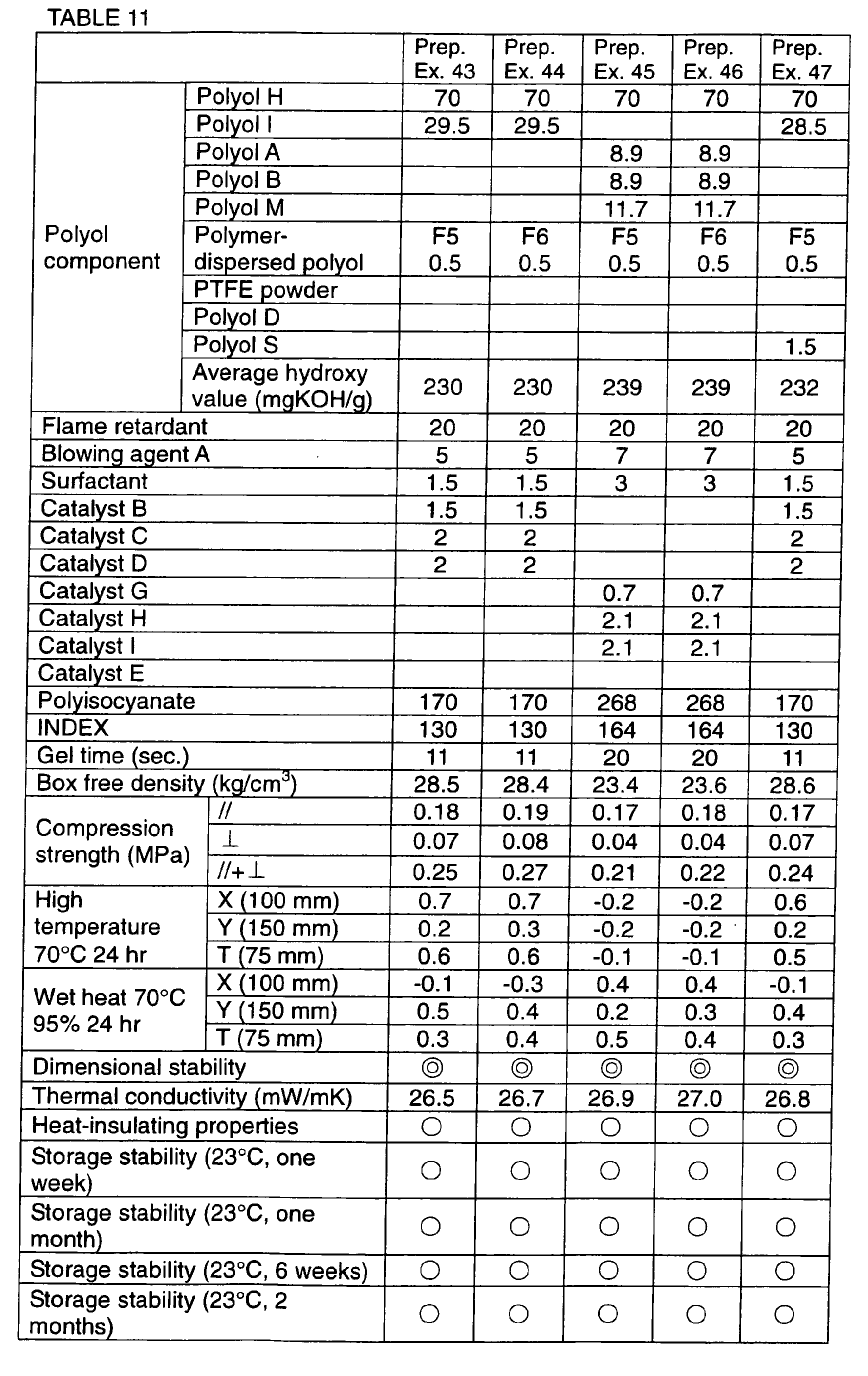

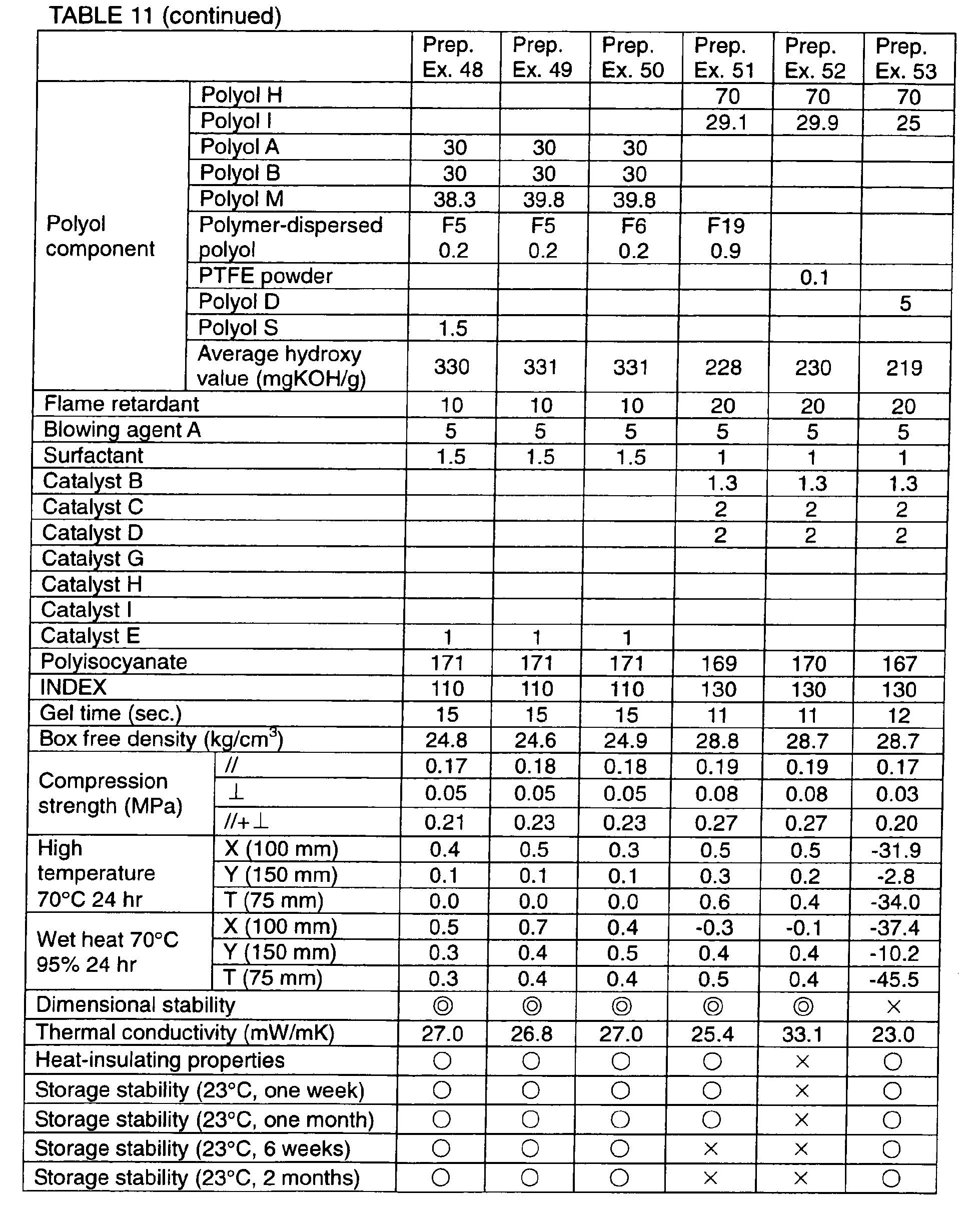

**TABLE 12**

| | | Prep. Ex. 54 | Prep. Ex. 55 | Prep. Ex. 56 | Prep. Ex. 57 | Prep. Ex. 58 | Prep. Ex.59 |
|---|---|---|---|---|---|---|---|
| Polyol component | Polyol J | 44.5 | 44.5 | 43.5 | 44.1 | 44.9 | 40 |
| | Polyol F | 35 | 35 | 35 | 35 | 35 | 35 |
| | Polyol L | 20 | 20 | 20 | 20 | 20 | 20 |
| | Polymer-dispersed | F5 | F6 | F5 | F19 | | |
| | polyol | 0.5 | 0.5 | 0.5 | 0.9 | | |
| | PTFE powder | | | | | 0.1 | |
| | Polyol D | | | | | | 5 |
| | Polyol S | | | 1 | | | |
| | Average hydroxy value (mgKOH/g) | 588 | 588 | 582 | 573 | 588 | 564 |
| Flame retardant | | 10 | 10 | 10 | 10 | 10 | 10 |
| Blowing agent A | | 2 | 2 | 2 | 2 | 2 | 2 |
| Blowing agent B | | 19 | 19 | 19 | 19 | 19 | 19 |
| Surfactant | | 1 | 1 | 1 | 1 | 1 | 1 |
| Catalyst B | | 0.2 | 0.2 | 0.2 | 0.2 | 0.2 | 0.2 |
| Catalyst C | | 0.2 | 0.2 | 0.2 | 0.2 | 0.2 | 0.2 |
| Catalyst D | | 0.2 | 0.2 | 0.2 | 0.2 | 0.2 | 0.2 |
| Polyisocyanate | | 177 | 177 | 177 | 177 | 181 | 175 |
| INDEX | | 105 | 105 | 105 | 105 | 105 | 105 |
| Gel time (sec.) | | 59 | 58 | 58 | 59 | 60 | 60 |
| Box free density (kg/cm³) | | 26.1 | 26.4 | 26.3 | 26.4 | 27.2 | 27.4 |
| Compression strength (MPa) | // | 0.14 | 0.14 | 0.14 | 0.14 | 0.14 | 0.15 |
| | ⊥ | 0.06 | 0.06 | 0.06 | 0.06 | 0.05 | 0.06 |
| | //+⊥ | 0.20 | 0.19 | 0.18 | 0.19 | 0.19 | 0.21 |
| Low temperature -30°C 50 hr | X (100 mm) | -2.9 | -2.9 | -2.5 | -2.9 | -3.1 | -24.6 |
| | Y (150 mm) | -0.9 | -0.8 | -0.7 | -0.8 | -0.6 | -1.2 |
| | T (75 mm) | -1.2 | -1.3 | -1.0 | -1.3 | -1.7 | -13.7 |
| Wet heat 70°C 95% 50 hr | X (100 mm) | 2.5 | 1.9 | 2.3 | 2.0 | 2.0 | 2.7 |
| | Y (150 mm) | 0.3 | 0.2 | 0.2 | 0.2 | 0.2 | 0.2 |
| | T (75 mm) | 1.7 | 1.6 | 1.6 | 1.5 | 1.6 | 2.5 |
| Dimensional stability | | ○ | ○ | ○ | ○ | ○ | × |
| Thermal conductivity (mW/mK) | | 21.3 | 21.5 | 21.6 | 21.1 | 23.8 | 21.0 |
| Heat-insulating properties | | ○ | ○ | ○ | ○ | × | ○ |
| Storage stability (23°C, one week) | | ○ | ○ | ○ | ○ | × | ○ |
| Storage stability (23°C, one month) | | ○ | ○ | ○ | ○ | × | ○ |
| Storage stability (23°C, 6weeks) | | ○ | ○ | ○ | × | × | ○ |
| Storage stability (23°C, 2months) | | ○ | ○ | ○ | × | × | ○ |

**TABLE 13**

| | | Prep. Ex. 60 | Prep. Ex. 61 | Prep. Ex. 62 | Prep. Ex. 63 | Prep. Ex.64 | Prep. Ex. 65 |
|---|---|---|---|---|---|---|---|
| Polyol component | Polyol A | 99.5 | 99.5 | 98.5 | 98 | 99.9 | 99.5 |
| | Polymer-dispersed | F5 | F6 | F5 | F19 | | |
| | polyol | 0.5 | 0.5 | 0.5 | 2 | | |
| | PTFE powder | | | | | 0.1 | |
| | Polyol D | | | | | | 0.5 |
| | Polyol S | | | 1 | | | |
| | Average hydroxy value (mgKOH/g) | 349 | 350 | 349 | 344 | 350 | 348 |
| Flame retardant | | 15 | 15 | 15 | 15 | 15 | 15 |
| Blowing agent A | | 4 | 4 | 4 | 4 | 4 | 4 |
| Blowing agent C | | 25 | 25 | 25 | 25 | 25 | 25 |
| Surfactant | | 1 | 1 | 1 | 1 | 1 | 1 |
| Catalyst F | | 1.5 | 1.5 | 1.5 | 1.5 | 1.5 | 1.5 |
| Polyisocyanate | | 163 | 163 | 163 | 163 | 164 | 163 |
| INDEX | | 110 | 105 | 105 | 110 | 105 | 105 |
| Gel time (sec.) | | 59 | 58 | 58 | 59 | 60 | 60 |
| Box free density (kg/cm³) | | 22.8 | 23.0 | 23.5 | 22.7 | 23.4 | 23.3 |
| Compression strength (MPa) | // | 0.19 | 0.20 | 0.19 | 0.19 | 0.17 | 0.22 |
| | ⊥ | 0.06 | 0.05 | 0.06 | 0.05 | 0.05 | 0.04 |
| | //+⊥ | 0.25 | 0.25 | 0.23 | 0.25 | 0.21 | 0.26 |
| Low temperature 0°C 24 hr | X (100 mm) | -0.6 | -0.4 | -0.3 | -0.7 | -0.4 | -0.5 |
| | Y (150 mm) | 0.3 | 0.2 | 0.2 | 0.4 | 0.3 | 0.3 |
| | T (75 mm) | 0.8 | -0.7 | -0.5 | -0.6 | -0.4 | -0.4 |
| Low temperature -30°C 24 hr | X (100 mm) | -4.8 | -4.2 | -4.0 | -4.9 | -4.0 | -11.5 |
| | Y (150 mm) | -0.1 | -0.3 | -0.1 | -0.1 | 0.1 | -0.7 |
| | T (75 mm) | -3.8 | -3.5 | -3.5 | -4.0 | -3.2 | -12.2 |
| Dimensional stability | | ○ | ○ | ○ | ○ | ○ | × |
| Thermal conductivity (mW/mK) | | 20.7 | 20.9 | 21.0 | 20.7 | 23.8 | 21.0 |
| Heat-insulating properties | | ○ | ○ | ○ | ○ | × | ○ |
| Storage stability (23°C, one week) | | ○ | ○ | ○ | ○ | × | ○ |
| Storage stability (23°C, one month) | | ○ | ○ | ○ | ○ | × | ○ |
| Storage stability (23°C, 6 weeks) | | ○ | ○ | ○ | × | × | ○ |
| Storage stability (23°C, 2 months) | | ○ | ○ | ○ | × | × | ○ |

**TABLE 14**

| | | Prep. Ex. 66 | Prep. Ex. 67 | Prep. Ex. 68 | Prep. Ex. 69 | Prep. Ex. 70 | Prep. Ex. 71 |
|---|---|---|---|---|---|---|---|
| Polyol component | Polyol R | 39 | 39 | 37.5 | 35 | 39.9 | 39.5 |
| | Polyol O | 30 | 30 | 30 | 30 | 30 | 30 |
| | Polyol A | 10 | 10 | 10 | 10 | 10 | 10 |
| | Polyol P | 10 | 10 | 10 | 10 | 10 | 10 |
| | Polyol Q | 10 | 10 | 10 | 10 | 10 | 10 |
| | Polymer-dispersed | F5 | F6 | F5 | F19 | | |
| | polyol | 1 | 1 | 1 | 5 | | |
| | PTFE powder | | | | | 0.1 | |
| | Polyol D | | | | | | 0.5 |
| | Polyol S | | | 1.5 | | | |
| | Average hydroxy value (mgKOH/g) | 406 | 407 | 405 | 390 | 408 | 408 |
| Flame retardant | | 10 | 10 | 10 | 10 | 10 | 10 |
| Blowing agent A | | 12 | 12 | 12 | 12 | 12 | 12 |
| Surfactant | | 1 | 1 | 1 | 1 | 1 | 1 |
| Catalyst J | | 1.2 | 1.2 | 1.2 | 1.2 | 1.2 | 1.2 |
| Catalyst K | | 0.6 | 0.6 | 0.6 | 0.6 | 0.6 | 0.6 |
| Polyisocyanate | | 307 | 307 | 307 | 307 | 307 | 307 |
| INDEX | | 110 | 110 | 110 | 110 | 110 | 110 |
| Gel time (sec.) | | 87 | 86 | 87 | 88 | 87 | 86 |
| Box free density (kg/cm³) | | 23.3 | 23.4 | 23.5 | 23.2 | 23.5 | 23.4 |
| Panel foam entire density | | 28.5 | 28.7 | 28.6 | 28.6 | 29.0 | 28.3 |
| Compression strength (MPa) | X | 0.12 | 0.13 | 0.12 | 0.12 | 0.13 | 0.12 |
| | Y | 0.07 | 0.07 | 0.07 | 0.07 | 0.08 | 0.06 |
| | T | 0.06 | 0.07 | 0.06 | 0.07 | 0.08 | 0.05 |
| High temperature 70°C 24 hr (core) | X (200 mm) | -0.2 | 0.1 | -0.2 | 0.3 | 0.1 | -2.1 |
| | Y (100 mm) | -1.0 | -1.1 | -0.9 | -1.0 | -0.6 | -1.1 |
| | T (25 mm) | -1.0 | 0.2 | -0.3 | -1.4 | -0.1 | -6.3 |
| Wet heat 70°C/95% 24 hr (with skin) | X (200 mm) | 0.1 | 0.4 | 0.2 | 0.3 | 0.3 | 1.4 |
| | Y (150 mm) | 0.4 | 0.4 | 0.2 | 0.3 | 0.3 | 0.3 |
| | T (50 mm) | 0.1 | 0.1 | 0.1 | 0.2 | 0.1 | -3.3 |
| Dimensional stability | | ○ | ○ | ○ | ○ | ○ | Δ |
| Thermal conductivity (mW/mK) | | 23.6 | 23.8 | 23.7 | 23.8 | 26.6 | 22.8 |
| Heat-insulating properties | | ○ | ○ | ○ | ○ | × | ○ |
| Storage stability (23°C, one week) | | ○ | ○ | ○ | ○ | × | ○ |
| Storage stability (23°C, one month) | | ○ | ○ | ○ | ○ | × | ○ |
| Storage stability (23°C, 6 weeks) | | ○ | ○ | ○ | × | × | ○ |
| Storage stability (23°C, 2 months) | | ○ | ○ | ○ | × | × | ○ |

As is evident from the results shown in Tables 9 to 14, in Production Examples 20 to 38, 43 to 50, 54 to 56, 60 to 62 and 66 to 68 wherein the polyol component (Z) to be reacted with a polyisocyanate component contained polymer-dispersed polyols F2, F5 to F7 and F9 to F17, which are the specific polymer-dispersed polyol (A) of the present invention, the storage stability (6 weeks) was excellent, and the heat-insulating properties and the dimensional stability of a rigid polyurethane foam were both good.

Particularly, in Production Examples 20 to 28, 29 to 38, 43 to 50, 54 to 56, 60 to 62 and 66 to 68 using polymer-dispersed polyols (F2, F5 to F7 and F 9 to F 15) wherein polyol Y1 (polyol G) was used in an amount of from 5% to 70% out of 100 mass% of the entire polyol (Y), though the amount of the polymer-dispersed polyol used was small as compared with Production Examples 39, 40, 51, 57, 63 and 69 using polymer-dispersed polyols (F18 and F 19) prepared without using polyol Y1, comparably and good dimensional stability and heat-insulating properties can be obtained. This is also considered to contribute to the excellent storage stability (6 weeks and 2 months).

Production Examples 20 to 38, 54 to 56 and 60 to 62 are preferable for the production of a laminate board. Production Examples 43 to 50 are preferable for spray-blown foaming. Production Examples 66 to 68 are preferable for the production of a molded product by pour-in-place.

Thus, it has been found that with respect to the polymer-dispersed polyol (A), the oxyethylene group content in the polyether polyol (Y) is at least 15 mass%, polyol Y1 having a hydroxy value of from 200 to 800 mgKOH/g and polyol Y2 having a hydroxy value of from 5 to 84 mgKOH/g are contained, and acrylonitrile or vinyl acetate is contained as a monomer having a polymerizable unsaturated group, whereby further remarkable effect of improving the storage stability can be obtained.

On the other hand, in Production Examples 39, 40, 51, 57, 63 and 69 using polymer-dispersed polyols F18 and F 19 prepared without using polyol Y1, though good heat-insulating properties and dimensional stability of a rigid polyurethane foam were obtained by adding relatively a large amount of a polymer-dispersed polyol, the storage stability (6 weeks and 2 months) became poor.

As shown in Production Examples 41, 52, 58, 64 and 70, in a case where a PTFE powder was used, it was confirmed that the storage stability (one week, one month, 6 weeks and 2 months) was poor.

It was confirmed that the rigid polyurethane foams in Production Examples 42, 53, 59, 65 and 71 produced by using polyol D containing no polymer particles were poor in the dimensional stability.

### INDUSTRIAL APPLICABILITY

The polymer-dispersed polyol (A) of the present invention can be preferably used for the production of a rigid polyurethane foam, and has a good storage stability even when mixed with a polyol (Z1) having a small molecular weight for rigid polyurethane foams.

Further, by using the polymer-dispersed polyol (A), weight reduction can be attained, and a rigid polyurethane foam excellent in both the heat-insulating properties and the dimensional stability can be obtained. Further, the polymer-dispersed polyol (A) is useful for the production of e.g. pour-in-place urethane foams, continuously produced board-stock foam and spray-blown foams.

The entire disclosures of Japanese Patent Application No. 2008-131858 filed on May 20, 2008 and Japanese Patent Application No. 2009-036907 filed on February 19, 2009, including specifications, claims and summaries are incorporated herein by reference in their entireties.

## Claims

1. A method for producing a rigid polyurethane foam, which comprises reacting a polyol component (Z) with a polyisocyanate component in the presence of a blowing agent, a surfactant and a catalyst, wherein the polyol component (Z) is obtained by mixing a polyol (Z1) with the following polymer-dispersed polyol (A) and has an average hydroxy value of from 200 to 800 mgKOH/g:
Polymer-dispersed polyol (A) being one having polymer particles dispersed in a polyol by polymerizing a monomer having a polymerizable unsaturated group in a polyol (X), wherein the polyol (X) contains a polyether polyol (Y), the polyether polyol (Y) has an oxyethylene group content of at least 15 mass%, the polyether polyol (Y) contains a polyol Y1 having a hydroxy value of from 200 to 800 mgKOH/g and a polyol Y2 having a hydroxy value of from 5 to 84 mgKOH/g, and the monomer having a polymerizable unsaturated group contains a fluorinated acrylate or a fluorinated methacrylate.

2. The method for producing a rigid polyurethane foam according to Claim 1, wherein the fluorinated acrylate or the fluorinated methacrylate is a monomer represented by the following formula (1): 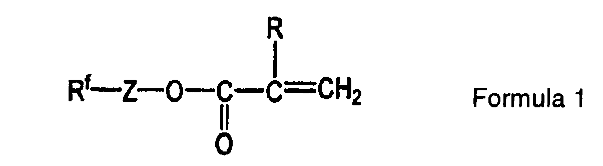 wherein R^{f} is a C₁₋₁₈ polyfluoroalkyl group, R is a hydrogen atom or a methyl group, and Z is a bivalent linking group having no fluorine atom, provided that Z and R^{f} are delimited so that R^{f} has a smaller number of carbon atoms.

3. The method for producing a rigid polyurethane foam according to Claim 1 or 2, wherein the monomer having a polymerizable unsaturated group further contains at least one member selected from the group consisting of acrylonitrile, vinyl acetate and styrene.

4. The method for producing a rigid polyurethane foam according to any one of Claims 1 to 3, wherein the polyether polyol (Y) has an oxyethylene group content of at least 20 mass%.

5. The method for producing a rigid polyurethane foam according to any one of Claims 1 to 4, wherein the blend ratio (Y1/Y2) of the polyol Y1 to the polyol Y2 is from 5/95 to 70/30 (mass ratio).

6. The method for producing a rigid polyurethane foam according to any one of Claims 1 to 5, wherein the polyol Y2 is a polyoxyalkylene polyol obtained by addition-polymerizing propylene oxide and ethylene oxide to a polyhydric alcohol.

7. The method for producing a rigid polyurethane foam according to any one of Claims 2 to 6, wherein the proportion of the monomer represented by the formula (1) in the entire monomer having a polymerizable unsaturated group, is from 30 to 100 mass%.

8. The method for producing a rigid polyurethane foam according to any one of Claims 1 to 7, wherein the proportion of the polymer-dispersed polyol (A) in the polyol component (Z) is at least 0.01 mass%, and the proportion of the polymer particles in the polyol component (Z) is at least 0.001 mass%.

9. A method for producing a rigid polyurethane foam, which comprises reacting a polyol component (Z) with a polyisocyanate component in the presence of a blowing agent, a surfactant and a catalyst, wherein the polyol component (Z) is obtained by mixing a polyol (Z1), the following polymer-dispersed polyol (A) and a polymer-dispersed polyol (B) not included in the polymer-dispersed polyol (A), and has an average hydroxy value of from 200 to 800 mgKOH/g:
Polymer-dispersed polyol (A) being one having polymer particles dispersed in a polyol by polymerizing a monomer having a polymerizable unsaturated group in a polyol (X), wherein the polyol (X) contains a polyether polyol (Y), the polyether polyol (Y) has an oxyethylene group content of at least 15 mass%, the polyether polyol (Y) contains a polyol Y1 having a hydroxy value of from 200 to 800 mgKOH/g and a polyol Y2 having a hydroxy value of from 5 to 84 mgKOH/g, and the monomer having a polymerizable unsaturated group contains a fluorinated acrylate or a fluorinated methacrylate.

10. The method for producing a rigid polyurethane foam according to Claim 9, wherein in the polyol component (Z), the proportion of the polymer-dispersed polyol (A) is at least 0.01 mass% and the proportion of the polymer-dispersed polyol (B) is at least 0.1 mass%, and the proportion of the polymer particles in the polyol component (Z) is at least 0.001 mass%.

11. The method for producing a rigid polyurethane foam according to Claim 9 or 10, wherein the mixing ratio of the polymer-dispersed polyol (A) to the polymer-dispersed polyol (B) is from 95:5 to 5:95 by the mass ratio of A:B.

12. The method for producing a rigid polyurethane foam according to any one of Claims 1 to 11, wherein the polyol component (Z) contains a polyoxyalkylene polyol prepared by using an active hydrogen compound having an aromatic ring as an initiator.

13. The method for producing a rigid polyurethane foam according to any one of Claims 1 to 12, wherein as the blowing agent, water alone, or water and at least one member selected from the group consisting of a hydrofluorocarbon compound and a hydrocarbon compound, are used.
